# EUROPÄISCHE PATENTANMELDUNG

(11) **EP 3 107 195 A1**
(43) Veröffentlichungstag der Anmeldung: **21.12.2016**
(21) Anmeldenummer: 15405041.3
(22) Anmeldetag: 16.06.2015
(51) Int. Cl.: H02K 41/03, H02K 11/33, B60L 13/03, H02K 9/08, E21B 7/00

(54) **LINEARMOTORANTRIEBSSYSTEM**

(71) Anmelder: InDriveTec AG, 8050 Zürich (CH)
(72) Erfinder: Julen, Eric, CH-8052 Zürich (CH); Vinzens, Martin, CH-8050 Zürich (CH)
(74) Vertreter: Stäbler, Roman

(57) **Zusammenfassung**

Die Erfindung betrifft ein Linearmotorantriebssystem zur Beschleunigung eines Fahrzeugs (3) innerhalb eines Beschleunigungsabschnitts auf einer Fahrtrasse (1). Das Linearmotorantriebssystem umfasst einen Stator mit mindestens zwei längs der Fahrtrasse (1) angeordneten Statorelementen (2), wobei die Statorelemente (2) zu mindestens zwei Statorgruppen (4.1 - 4.4) zusammengefasst sind. Ferner umfasst das Linearmotorantriebssystem einen Läufer (17a,b), welcher am Fahrzeug (3) befestigt ist. Dabei ist jede Statorgruppe (4.1 - 4.4) mit mindestens einem eigenen Energiewandler (5.1 - 5.4) zur Energieversorgung permanent verbunden, welcher einzeln angesteuert werden kann. Mindestens zwei der Statorgruppen (4.1 - 4.4) sind derart angeordnet, dass der Läufer gleichzeitig mit den mindestens zwei Statorgruppen (4.1 - 4.4) wechselwirken kann. Die Erfindung betrifft weiter die Verwendung des Linearmotorantriebssystems zur Beschleunigung eines Fahrzeugs 3 zum Personentransport in einer Vergnügungsanlage.

## Beschreibung

### Technisches Gebiet

Die Erfindung betrifft ein Linearmotorantriebssystem zur Beschleunigung eines Fahrzeugs innerhalb eines Beschleunigungsabschnitts auf einer Fahrtrasse, insbesondere zum Personentransport in einer Vergnügungsanlage. Das Linearmotorantriebssystem umfasst einen Stator mit mindestens zwei längs der Fahrtrasse angeordneten Statorelementen mit Statorwicklungen, wobei die Statorelemente zu mindestens zwei Statorgruppen zusammengefasst sind. Ferner umfasst das Linearmotorantriebssystem einen Läufer, welcher am Fahrzeug befestigt ist und welcher mit einem vom Stator erzeugten Magnetfeld zu wechselwirken vermag. Die Erfindung betrifft weiter die Verwendung des Linearmotorantriebssystems zur Beschleunigung eines Fahrzeugs zum Personentransport in einer Vergnügungsanlage, alles gemäss den Oberbegriffen der unabhängigen Ansprüche.

### Stand der Technik

Für Vergnügungsanlagen sind zahlreiche Antriebssysteme bekannt. Es ist beispielsweise bekannt, ein Personenfahrzeug durch ein hydraulisches System anzutreiben. Es sind auch Systeme bekannt, welche auf Schwungscheibenantrieben und pneumatischen Antrieben basieren. Der Trend geht dabei zu immer höheren Geschwindigkeiten und höheren Beschleunigungen, um einen höheren Nervenkitzel zu erzielen. Dabei verbreiten sich immer mehr elektrische Linearmotoren. Diese erreichen heute bei ca. 160 km/h ihre Grenzen und noch nicht die im Vergleich zu den hydraulisch angetriebenen Systemen erreichten Maximalgeschwindigkeiten von 240 km/h. Die Verwendung von Linearmotoren zum Antrieb von Fahrzeugen in Vergnügungsanlagen bietet aber zahlreiche Vorteile. Linearmotoren sind verschleissfrei, können energetisch wirtschaftlicher betrieben werden und ermöglichen eine gezieltere Steuerung der Position und der Geschwindigkeit des Fahrzeugs.

Üblicherweise ist der Stator als aktiver Teil der verwendeten Linearmotoren deutlich länger als der Läufer als passiver Teil, welcher an dem Fahrzeug befestigt wird. Da die Bestromung des gesamten Stators zu grossen Verlusten führen würde, wird der Stator nur abschnittsweise bestromt. Beispielsweise sieht die WO 99 242 84 vor, einzelne Statorabschnitte in Reihe zu schalten und die nicht zur Vorschubkraft beitragenden Statorabschnitte durch parallel geschaltete Schaltervorrichtungen zu überbrücken. Da für eine konstante Kraftübertragung auf den Stator immer mindestens zwei Statorgruppen gleichzeitig bestromt sein müssen, muss die Auslegungsspannung eines Statorabschnittes auf Grund der Serienschaltung reduziert werden. Die maximale Auslegungsspannung eines Linearmotorantriebssystems ist in der Regel auf Grund von technischen Limitierungen wie beispielsweise der Spannungsfestigkeit eines Halbleiterschalters und auch regulativen bzw. sicherheitstechnischen Erfordernissen begrenzt. Ebenso ist der maximal mögliche Motorstrom begrenzt durch technische und wirtschaftliche Zwänge. Durch die Serienschaltung reduziert sich deshalb die maximal erzielbare Antriebsleistung des elektrischen Linearmotorantriebssystem. Gleichzeitig führt der Spannungsabfall an den Leistungschalter in den parallelgeschalteten Schaltervorrichtungen zu Energieverlusten. Einen anderen Ansatz sieht EP 2 156 979 vor, welche mindestens zwei Energieversorgungseinheiten umfasst, und in welcher die Statorabschnitte gruppenweise in Form von Statorgruppen Energieversorgungseinheiten zugeordnet sind, wobei die Statorabschnitte der einzelnen Statorgruppen sich entlang des Linearmotors abwechseln und die Statorabschnitte einer Statorgruppe jeweils parallelgeschaltet sind. Nur jeweils die Statorabschnitte der parallel geschalteten Statorabschnitte einer Statorgruppe welche zur Kraftübertragung beitragen, werden entsprechend der Lage des Läufers über einen gesteuerten Schalter zugeschaltet. Die Schalter können lastfrei geschaltet und die Verluste reduziert werden. Damit ein lastfreies Schalten möglich ist, muss jedoch die Läuferlänge an die Statorlänge und an das Produkt aus Schaltzeitdauer der Schalter und maximaler Vorschubgeschwindigkeit angepasst sein. Das bedingt jedoch, dass die Läuferlänge reduziert werden muss, wodurch sich auch das Leistungsvermögen des Antriebsystems reduziert.

### Darstellung der Erfindung

Aufgabe der Erfindung ist es, ein dem eingangs genannten technischen Gebiet zugehörendes Linearmotorantriebssystem zu schaffen, welches es ermöglicht auf einer kürzeren Beschleunigungsstrecke auf eine hohe Geschwindigkeit beschleunigen zu können und gleichzeitig die Herstellkosten sowie die Unterhaltskosten zu reduzieren.

Die Lösung der Aufgabe ist durch die Merkmale des Anspruchs 1 definiert. Gemäss der Erfindung ist jede Statorgruppe mit mindestens einem eigenen Energiewandler zur Energieversorgung permanent verbunden, welcher einzeln angesteuert werden kann. Dabei sind mindestens zwei der Statorgruppen derart angeordnet, dass der Läufer gleichzeitig mit den mindestens zwei Statorgruppen wechselwirken kann, so dass diese mindestens zwei Statorgruppen gleichzeitig jeweils von dem eigenen Energiewandler mit Energie versorgbar sind. Zur Erhöhung der Beschleunigung des Fahrzeugs wird der Stator bevorzugterweise zusätzlich aktiv gekühlt.

Durch das erfindungsgemässe Linearmotorantriebssystem wird es ermöglicht, höhere Beschleunigungsleistungen zu erzielen und damit auch hohe Antriebskräfte bei hohen Geschwindigkeiten zu erzeugen. Dadurch kann die Beschleunigungsstrecke und somit auch die Länge des Stators verkürzt werden. Gleichzeitig können Schalter entfallen, da nicht mehr ein Umschalten zwischen den einzelnen Statorgruppen notwendig ist. Somit entfallen nicht nur die Kosten für die Schalterelemente sondern auch Energiekosten durch einen Spannungsabfall am Schalter bzw. Energieverluste durch das Schalten. Gleichzeitig kann ein grosser und teurerer Energiewandler durch kleinere und wesentlich kostengünstigere Energiewandler ersetzt werden. Dadurch werden ebenfalls die Herstellund Unterhaltskosten reduziert.

Unter einer Beschleunigung ist im Rahmen dieser Erfindung sowohl eine positive als auch negative Beschleunigung zu verstehen. Bei einer positiven Beschleunigung wird die Geschwindigkeit des Fahrzeugs erhöht, während bei einer negativen Beschleunigung die Geschwindigkeit des Fahrzeugs reduziert bzw. das Fahrzeug abgebremst wird. Im letzteren Fall entspricht der Beschleunigungsabschnitt einem Bremsabschnitt respektive einem Verzögerungsabschnitt.' Im Bereich des Beschleunigungsabschnitts kann die Fahrtrasse gerade, kurvig oder geneigt sein.

Unter einer permanenten Verbindung zwischen einer Statorgruppe und dem mindestens einen Energieversorger wird eine Verbindung verstanden, welche unabhängig von der Position des Läufers entlang der Fahrtrasse bestehen kann und folglich kein Zuschalten bzw. Trennen der Verbindung in Abhängigkeit der Position des Läufers verlangt. Es ist jedoch möglich, dass eine permanente Verbindung zwischen einer Statorgruppe und einem mit der Statorgruppe verbundenen Energiewandler einen Trennschalter umfassen kann, der die Verbindung zwischen der Statorgruppe und dem jeweiligen Energiewandler zu unterbrechen oder kurzzuschliessen vermag, um beispielsweise sicherheitstechnischen Aspekten Rechnung zu tragen. Zu diesen sicherheitstechnischen Aspekten zählen unter anderem das Stromfreischalten für Ein- und Aussteigevorgänge sowie für Wartungsarbeiten oder auch das Stromfreischalten oder Kurzschliessen der Statorgruppen und/oder Statorelemente, um in einer Notsituation das Fahrzeug abbremsen zu können.

Durch die aktive Kühlung des Stators kann die Vorschubkraft des Linearmotorantriebssystems und somit die maximal erzielbare Leistung weiter erhöht werden. Unter einer aktiven Kühlung wird im Rahmen der Erfindung eine forcierte Fluidkühlung, d.h. eine Gas- oder auch eine Flüssigkeitskühlung verstanden. Bei einer Gaskühlung wird das Gas zur Ableitung der Wärme über die Aussenflächen des Stators oder durch Kühlkanäle durch den Stator hindurch geführt. Vorzugsweise wird bei einer Kühlung mit Gas die Umgebungsluft als Kühlmedium verwendet. Das verwendete Kühlmedium kann über einen Wärmetauscher zusätzlich abgekühlt werden. Bei einer Flüssigkeitskühlung wird eine Kühlflüssigkeit zum Abführen der Wärme verwendet. Dazu sind die Statorelemente mit Kühlkanälen versehen, durch welche Kühlflüssigkeit zum Abführen der Wärme geführt wird. Die Kühlflüssigkeit wird vorzugsweise über einen geschlossen Kühlkreislauf zugeführt und aktiv über einen Wärmetauscher gekühlt. Es ist auch eine Kombination aus einer Flüssigkeitskühlung und einer Gaskühlung möglich.

Alternativ kann der Stator auch passiv gekühlt werden, beispielsweise über an der Aussenseite des Stators angebrachte Kühlkörper, in den Stator integrierte Kühlflächen oder auch über wärmeleitende Verbindungen zwischen dem Stator respektive den Statorelementen und der Fahrtrasse, an welcher die Statorelemente angeordnet sind.

Die verschiedenen obengenannten Kühlformen können auch miteinander kombiniert werden.

Der Energieaustausch zwischen Energiewandler und Statorgruppe kann vorzugsweise in zwei Richtungen erfolgen: Eine Statorgruppe kann einerseits über den mindestens einen über die permanente Verbindung verbundenen Energiewandler mit Energie versorgt werden. Sie kann aber andererseits an den mindestens einen über die permanente Verbindung verbundenen Energiewandler auch Energie abgeben. Im ersteren Fall arbeitet sie motorisch, im letzteren Fall generatorisch.

In einer weiteren Ausführungsform sind mindestens drei der Statorgruppen derart angeordnet, dass der Läufer gleichzeitig mit den mindestens drei Statorgruppen wechselwirken kann, so dass diese mindestens drei Statorgruppen gleichzeitig jeweils von dem eigenen Energiewandler mit Energie versorgbar sind.

Es ist natürlich möglich, dass das Linearmotorantriebssystem neben einem ersten Läufer auch weitere Läufer umfassen kann, welche jeweils an einem weiteren Fahrzeug befestigt sind. Ebenso kann das Linearmotorantriebssystem weitere Statoren zur Beschleunigung eines Fahrzeugs innerhalb von weiteren Beschleunigungsabschnitten umfassen.

In einer weiteren bevorzugten Ausführungsform ist eine Wirklänge des Läufers länger als eine Wirklänge eines von zwei aufeinanderfolgenden Statorgruppen erzeugten Magnetfelds, vorzugsweise aber kürzer als eine Wirklänge des Stators. Unter der Wirklänge des Läufers wird die Ausdehnung eines Wirkbereichs des Läufers längs des Fahrzeugs in Richtung der Fahrtrasse verstanden, in welchem ein Magnetfeld des Läufers mit dem Magnetfeld des Stators zu wechselwirken vermag. Unter der Wirklänge des Stators wird entsprechend die Ausdehnung eines Wirkbereichs des Stators längs der Fahrtrasse verstanden, auf welchem das Magnetfeld des Stators mit dem Magnetfeld des Läufers zu wechselwirken vermag. Analog wird unter der Wirklänge von zwei aufeinanderfolgenden Statorgruppen die Ausdehnung des Wirkbereichs der zwei aufeinander Statorgruppen längs der Fahrtrasse verstanden, in welchem ein Magnetfeld der beiden aufeinanderfolgenden Statorgruppen mit dem Magnetfeld des Läufers zu wechselwirken vermag. Die Wirklänge eines einzelnen Statorelementes wird entsprechend definiert.

Statorgruppen gelten dabei als aufeinanderfolgend, wenn ihre Statorelemente räumlich aufeinanderfolgend in Richtung der Fahrtstrecke hintereinander angeordnet sind. Auch bei einem einreihigen Statoraufbau kann dann motorische Energie von zwei oder mehr Energiewandlern gleichzeitig von dem Stator auf den Läufer übertragen oder generatorische Energie vom Läufer über den Stator an zwei oder mehr Energiewandler zurückgespeist werden. Die Statorgruppen respektive die Statorelemente können dabei in Richtung der Fahrtrichtung direkt aneinander anschliessen oder auch Lücken aufweisen, so dass auch die Wirkbereiche des Stators und/oder der Statorgruppen innerhalb ihrer jeweiligen Wirklänge entlang der Fahrtrasse Lücken aufweisen können. Diese Lücken müssen jedoch kürzer sein als die Wirklänge des Läufers, da es sonst im Wirkbereich des Stators Positionen gäbe, in welcher der Läufer nicht mit dem Stator zu wechselwirken vermag, und in welchen folglich keine Vorschubkraft auf den Läufer generiert werden kann.

Eine gleichzeitige Übertragung der Energie von mindestens zwei Energiewandlern ist jedoch auch möglich, wenn mindestens zwei Statorgruppen parallel zur Fahrrichtung oder sich in Richtung der Fahrtrasse überlappend angeordnet sind und deren Wirkbereich von der Wirklänge des Läufers überlappt wird.

Der Vorteil der bevorzugten Ausführungsform mit räumlich in Richtung der Fahrtstrecke angebrachten Statorgruppen ist ein schmalerer und in der Regel auch kostengünstigerer Stator. Der Vorteil der parallelen bzw. überlappenden Anordnung ist ein kürzerer Läufer.

In einer besonderen Ausführungsform ist die Wirklänge des Läufers länger als die Wirklänge zweier räumlich hintereinander angeordneten Statorgruppen, wobei mindestens eine weitere Statorgruppe parallel zu den zwei räumlich hintereinander angeordneten Statorgruppen angeordnet ist, so dass der Wirkbereich der weiteren Statorgruppe in Bezug auf die Fahrtrasse innerhalb des Wirkbereichs der zwei räumlich hintereinanderliegenden Statorgruppen liegt. Dadurch ist es möglich, gleichzeitig die Energie von mindestens drei Wechselrichtern über den Stator auf den Läufer zu übertragen.

Vorzugsweise ist die Wirklänge des Läufers zwar länger als die Wirklänge zweier aufeinanderfolgender Statorgruppen, aber auch kürzer als die Wirklänge des Stators. Bei einem solchen Linearmotorantriebssystem handelt es sich um ein Langstatorlinearmotorantriebssystem. Ein solcher Langstator umfasst folglich mindestens drei Statorgruppen und mindestens drei Statorelemente. In dieser bevorzugten Ausführungsform kann der Läufer in mindestens einer Position innerhalb des Beschleunigungsabschnitts auf der Fahrtrasse über seine ganze Wirklänge mit dem Magnetfeld des Stators wechselwirken, um eine Vorschubs- respektive eine Bremskraft zu erzeugen.

Bei besonders langen Fahrzeugen, meistens Fahrzeugen welche aus mehreren Wagen bestehen, kann die Wirklänge des Läufers jedoch auch länger als die Wirklänge des Magnetfelds des Stator sein. In diesem Fall können alle Statorgruppen gleichzeitig zur Kraftübertragung beitragen, wenn sich das Fahrzeug mit der gesamten Wirklänge des Läufers im Wirkbereich des Stators befindet.

In einer bevorzugten Ausführungsform ist die Wirklänge des Läufers über die Fahrzeuglänge verteilt.

Ein Fahrzeug kann aus mehreren hintereinander angereihten Wagen bestehen. Die Wagen sind über Verbindungselemente miteinander verbunden, welche die Abstände zwischen den Wagen in Richtung der Fahrtrasse im Wesentlichen konstant halten, aber Winkeländerungen und/oder kleine relative Querbewegungen der Wagen zueinander ausgleichen. Die Verbindungselemente können beispielsweise einfache Gelenke, Kugeloder Kardangelenke umfassen. Es können aber auch gelenkfreie Kupplungen verwendet werden, welche beispielsweise mit einem in Querrichtung elastischen Element ausgestattet sind. Als Verbindungselemente können aber auch nichtmechanische Elemente wie Magnetkupplungen verwendet werden. Der Läufer eines mehr als einen Wagen umfassenden Fahrzeugs ist vorzugsweise über mehr als einen Wagen verteilt, so dass sich auch die Wirklänge des Läufers über mehrere Fahrzeuge verteilt.

Bei einem solchen bevorzugten Linearmotorantriebssystem ist die erreichbare Beschleunigung nahezu unabhängig von der Länge des Fahrzeugs, da die Vorschubkraft des Linearmotorantriebssystems ebenso proportional zur Fahrzeuglänge ist wie die zu beschleunigende Masse des Fahrzeugs, weil je nach Länge des Fahrzeugs mehr Statorgruppen mit Energie versorgt werden und mit dem Läufer wechselwirken können.

Eine effektive Wirklänge ergibt sich aus der aufsummierten Wirklänge der einzelnen Läuferelemente, aus welchen sich der Läufer eines Fahrzeugs zusammensetzt. Beispielsweise kann nur jeder n-te Wagen mit einem Läuferelement versehen sein, wodurch sich die effektive Wirklänge reduziert, während die Wirklänge des Läufers gleich lang sein kann, wie bei einem Fahrzeug, bei welchem an jedem Wagen über die gesamte Länge Läuferelemente angebracht sind. Ebenso ist es möglich, dass der Stator in seiner länglichen Ausdehnung Lücken enthält, beispielsweise können einzelne Statorelemente durch Bremselemente ersetzt werden. Dies ist insbesondere in Bereichen der Fahrstrecke möglich, in dem eine geringere Beschleunigung erforderlich ist. Die Bremselemente erlauben zum Beispiel ein Abbremsen des Fahrzeugs im Falle eines Zurückrollens des Fahrzeugs infolge einer Notsituation oder eines Stromausfalls.

Das erfindungsgemässe Linearmotorantriebssystem kann auch noch dann betrieben werden, wenn ein Energiewandler ausfällt.

In einer weiteren bevorzugten Ausführungsform besitzt das erfindungsgemässe Linearmotorantriebssystem eine Speiseeinheit und einen mindestens zweisträngigen Versorgungsbus. Bei dem Versorgungsbus handelt es sich vorzugsweise um einen Gleichspannungsbus. Der Versorgungsbus ist über die Speiseeinheit mit einem Stromnetz verbindbar. Die Energiewandler können über den Versorgungsbus mit Energie versorgt werden.

Durch den Versorgungsbus können mehrere Energiewandler an eine gemeinsame Speiseeinheit angeschlossen werden. Der Versorgungsbus ermöglicht auch einen Energieaustausch zwischen der Speiseeinheit und den Energiewandlern, aber auch zwischen den Energiewandlern selbst. Besonders bevorzugt wird eine einzelne Speiseeinheit verwendet.

Die Speiseeinheit ermöglicht den Anschluss an ein Stromnetz, vorzugsweise an ein öffentliches Stromnetz. Bei dem Stromnetz kann es sich um ein Gleichstrom- oder ein Wechselstromnetz handeln, insbesondere um ein Drehstromnetz.

Der Versorgungsbus kann aufgeteilt sein, beispielsweise mittig in zwei Stränge, so dass die Entfernung der Energiewandler zur Speiseeinheit und /oder die Länge des Versorgungsbus minimiert wird. Vorzugsweise ist der Versorgungsbus ein zweisträngiger Gleichspannungsversorgungsbus, der über einen Gleichspannungszwischenkreis eine weitgehende Entkopplung der Speiseeinheit und der Energiewandler bei einem geringen Verdrahtungsaufwand ermöglicht. Besonders bevorzugt ist ein Gleichspannungszwischenkreis, welcher beispielsweise im Vergleich zu einem Stromzwischenkreis eine einfache Parallelschaltung der Energiewandler ermöglicht. Im Falle eines Anschluss an ein Wechselspannungsnetz und eines Gleichspannungsversorgungsbusses umfasst die Speiseeinheit einen Gleichrichter zum Umwandeln der Wechselspannung in eine Gleichspannung. Der Gleichrichter kann dabei passiv als auch aktiv ausgeführt sein. Die Speiseeinheit mit einem aktiven Umrichter kann dabei auch rückspeisefähig ausgeführt sein, um überschüssige Energie, welche beispielsweise durch den generatorischen Betrieb des Linearmotorantriebssystems beim Abbremsen eines Fahrzeugs erzeugt wird, ins Netz zurückspeisen zu können. Andererseits ermöglicht ein aktiver Gleichrichter auch die Regelung der Zwischenkreisspannung. Diese kann dann nicht nur stabil gehalten werden, sondern es kann auch ein etwas höherer Spannungspegel erreicht werden, was sich positiv auf die Reduktion des Beschleunigungsweges auswirkt.

Üblicherweise ist die Speiseinheit über einen Transformator an das Stromnetz angeschlossen. In den meisten Fällen ist das Stromnetz ein Niederspannungs- oder Mittelspannungsdrehstromnetz. Der Transformator dient zur galvanischen Trennung des Linearmotorantriebssystem vom Stromnetz sowie zur Anpassung der Spannungsamplitude an die zulässige Einspeisespannung des Speisemoduls.

Alternativ können die Energiewandler auch über eine integrierte Speiseeinheit verfügen oder auch als Direktumrichter ausgeführt sein, so dass der Versorgungsbus und eine separate Einspeiseeinheit eliminiert werden kann.

Direktumrichter sind rückspeisefähig und haben einen grösseren Wirkungsgrad, wenn das Fahrzeug sich mit einer konstanten Geschwindigkeit bewegt, bei welcher die Ein- und Ausgangsfrequenz gleich sind.

Bevorzugt sind die Energiewandler des erfindungsgemässen Linearmotorantriebssystems entlang des Beschleunigungsabschnitts verteilt angeordnet. Durch die Verteilung der Energiewandler entlang des Beschleunigungsabschnitts kann der Verdrahtungsaufwand reduziert werden. Das gilt insbesondere dann, wenn die Energiewandler über einen zweisträngigen Versorgungsbus verbunden werden. Dabei werden die Energiewandler möglichst in der Nähe der Statorgruppen angebracht.

Durch die Verteilung der Energiewandler entlang der Beschleunigungsstrecke wird der Platzbedarf für einen zentralen Elektroraum geringer. Bei grossen Anlagen steht in der Nähe der Fahrtrasse oft genügend Platz zur Verfügung, in welchem die Wechselrichter untergebracht werden können. Durch kürzere Kabel werden zudem die Leitungsverluste und elektromagnetischen Störungen verringert. Die Energiewandler können zusätzlich mit Sensoreingängen zum Anschluss von Sensoren versehen sein. Durch die Anordnung der Energiewandler in der Nähe der Statorgruppen können folglich auch die Sensorkabel verkürzt und somit die Störeinflüsse reduziert werden. Die Energiewandler können über ein digitales Bussystem untereinander verbunden sein, so dass ein möglichst einfacher Datenaustausch ermöglicht wird. In bestimmten Fällen kann es jedoch von Vorteil sein, die Energiewandler in einem zentralen Raum unterzubringen oder mangels Platzbedarf entlang der Fahrtrasse diese entfernt von derselben zu platzieren.

In einer besonderen Ausführungsform sind die Energiewandler in den Statorgruppen integriert, wodurch ein besonders einfacher Aufbau des Antriebsystems ermöglicht wird.

In einer weiteren bevorzugten Ausführungsform umfasst das erfindungsgemässe Linearmotorantriebssystem einen Energiespeicher, der an den Versorgungsbus angeschlossen ist. Der Energiespeicher ermöglicht es, die maximale Ein- bzw. Rückspeiseleistung vom bzw. ins Stromnetz zu reduzieren. Der Energiespeicher umfasst vorzugsweise mindestens eine Batterie. Der Energiespeicher ist insbesondere in der Lage Leistungsspitzen beim Ein- bzw. Rückspeisen von Energie aus bzw. in das Stromnetz zu reduzieren, da das Linearmotorantriebssystem beim Beschleunigen des Fahrzeuges auf eine höhere Geschwindigkeit einen beträchtlichen Anteil der Energie aus dem Energiespeicher beziehen bzw. beim Abbremsen auf eine geringere Geschwindigkeit in den Energiespeicher zurückspeisen kann.

Dadurch kann die Anschlussleistung der gesamten Anlage reduziert werden. Optimaler Weise kann der Energiespeicher die komplette für einen Bewegungszyklus des Fahrzeugs notwendige Energie aufnehmen respektive abgeben.

Die für einen Bewegungszyklus notwendige Energie kann neben der zur Beschleunigung des Fahrzeugs notwendigen kinetischen Energie auch die potentielle Energie umfassen, welche zur Überwindung eines Höhenprofils oder von sonstigen konservativen Kräften, wie beispielsweise einer Federkraft, notwendig ist. Kann die gesamte kinetische wie auch potentielle Energie des Fahrzeugs im Energiespeicher gespeichert werden, dann muss nur noch die Verlustleistung aus dem Stromnetz bezogen werden.

In manchen Fällen ist es jedoch ausreichend, wenn das Antriebssystem rückspeisefähig ist, insbesondere wenn die Anschlussleistung gering ist. In diesem Fall wird überschüssige Energie, welche bei Bremsvorgängen freigesetzt wird, in das Stromnetz zurückgespeist und nicht zwischengespeichert. Alternativ ist auch ein Linearmotorantriebssystem möglich, bei welchem die Energie weder zwischengespeichert noch zurückgespeist wird. Diese Variante kann vorteilhaft sein, wenn die Verlustleistung sehr hoch ist, so dass eine Speicherung der Energie oder eine Rückspeisung der Energie ins Netz aus technischen und/oder wirtschaftlichen Gründen nicht sinnvoll ist.

In einer besonders bevorzugten Ausführungsform ist der Energiespeicher durch Batteriemodule realisiert. Durch Batteriemodule kann eine hohe Leistungsdichte bei gleichzeitig geringen Kosten erzielt werden. Die Batteriemodule sind dabei vorzugsweise mit schnellladefähigen Lithium-Ionen Batterien ausgestattet. Um ein schnelles Be- und Entladen sowie eine hohe Lebensdauer zu erreichen, werden die Batterien bevorzugt nur um etwa maximal 5% in Bezug ihrer Gesamtkapazität entladen, und in noch bevorzugter Weise auf etwa maximal 1% ihrer Gesamtkapazität entladen. Die Batteriemodule besitzen eine sehr hohe Speicherkapazität und können eine sehr grosse Lebensdauer von beispielsweise bis zu ca. 20 Jahren haben. Gleichzeitig ermöglichen sie eine lange Speicherung der Energie, beispielsweise auch bei längeren Betriebspausen einer Anlage. Insbesondere können Batteriemodule über einen direkten DC-DC Wandler an den Gleichspannungsbus angeschlossen werden, welcher keine Spannungsreduktion, beispielsweise von 1000V auf 500V erfordert. Es sind jedoch andere Energiespeicher wie Supercaps oder Schwungräder einsetzbar, welche beide ebenfalls eine hohe Leistungsdichte ermöglichen.

Bei einer weiteren bevorzugten Ausführungsform sind die Energiewandler als Wechselrichter, vorzugsweise mehrphasige Wechselrichter ausgeführt. Ein Wechselrichter erzeugt aus einer Gleichspannung eine Wechselspannung bzw. aus einem Gleichstrom ein Wechselstrom variabler Frequenz und Amplitude.

Die mehrphasigen Wechselrichter sind dabei vorzugsweise als zwei- oder dreiphasige Wechselrichter ausgeführt, welche aus einer Gleichstrom- oder Gleichspannung eine zwei-oder mehrphasige Wechselspannung erzeugen, insbesondere eine zwei- oder eine dreiphasige Wechselspannung.

Der Wechselrichter kann je nach Statortyp, einen sinusförmigen Ausgangsstrom oder einen blockförmigen Ausgangsstrom erzeugen. Beispielsweise kann zum Betrieb eines elektronisch kommutierten Stators ein blockkommutierter Ausgangsstrom vorteilhaft sein. Nachteilig bei einem blockkommutierten Ausgangsstrom sind jedoch eine höhere Kraftwelligkeit im Vergleich zum sinuskommutierten Ausgangsstrom und entsprechend auch die erhöhte Geräuschentwicklung. Es sind jedoch auch andere Stromformen denkbar.

Eine bevorzugte Ausführungsform sieht die Verwendung von mehrphasigen Wechselrichtern vor, welche pro Phase einen Einphasenwechselrichter umfassen. Die Mehrphasigkeit wird durch die phasenversetzte Ansteuerung der Einphasenwechselrichter erreicht. Jeder dieser Einphasenwechselrichter besitzt einen Ausgang mit jeweils zwei Anschlüssen, zwischen denen eine Phase einer Statorgruppe angeschlossen werden kann, wobei die Phasen der Statorgruppen voneinander galvanisch getrennt sind. Dadurch wird erreicht, dass der Motor mit einer tieferen Zwischenkreisspannung betrieben werden kann als dies bei einer Verkettung der Ausgangspannung der Fall ist, wenn der Motor mit einem konventionellen Mehrphasenwechselrichter betrieben wird. Ein Einphasenumrichter kann durch zwei parallele Halbbrücken (Twin-Schaltung) realisiert werden, welche um 180° zueinander versetzt angesteuert werden.

Vorzugsweise werden Insulated-Gate-Bipolar-Transistoren (IGBT) als Schalter in den Wechselrichter verwendet, da diese eine effiziente Regelung des Laststroms ermöglichen. Es können inzwischen jedoch auch andere Schalter wie beispielsweise Hochspannungs-Leistungs-MOSFET (metal-oxide-semiconductor field-effect transistor) Schalter verwendet werden. Bevorzugt werden dabei Halbleiterschalter auf der Basis von Silicium (Si), Siliciumcarbid (SiC) und Galliumarsenid (GaAs) als Schalter verwendet.

Alternativ kann der Energiewandler beispielsweise auch ein Gleichstromwandler sein, wenn beispielsweise eine mechanische Kommutierung verwendet wird. Es ist jedoch auch möglich Frequenzumformer bzw. Direktumformer als Energiewandler zu verwenden, die direkt an ein Stromnetz bzw. über einen Trafo an ein Stromnetz angeschlossen werden können.

Besonders bevorzugt werden Niederspannungs-Wechselrichter verwendet, vorzugsweise Niederspannungs-Wechselrichter, welche für die gleiche Leistung ausgelegt sind. Niederspannungs-Wechselrichter sind wesentlich günstiger und sicherer als Wechselrichter, welche mit höherer Spannung arbeiten, wie zum Beispiel Mittelspannungs-Wechselrichter. Zusätzlich wird der Sicherheitsaufwand bei der Verwendung von Niederspannungs-Wechselrichter wesentlich geringer: Der Kostenaufwand kann reduziert und gleichzeitig eine höhere Leistungsdichte, und somit ein kürzerer Beschleunigungsweg realisiert werden.

Als Niederspannungs-Wechselrichter werden Wechselrichter mit einem verketteten Wechselspannungseffektivwert von maximal 1000V bzw. einer maximalen Gleichspannung von maximal 1500V verstanden. Durch die Beschränkung auf Niederspannungskomponenten vereinfachen sich der Betrieb und die Wartung des Linearmotorantriebssystems, da keine besondere Schulung und weniger teure Spezialgeräte benötigt werden.

Zudem ist durch die Verwendung von Niederspannungs-Wechselrichter gleicher Leistung eine einfache Skalierung einer Anlage möglich. Auch dadurch ist es möglich die Anschaffungs-, die Herstellungs- als auch die Wartungskosten zu senken.

Es ist jedoch auch möglich, einzelne Statorgruppen und/oder die damit verbundenen Umrichter an spezifische Anforderungen eines spezifischen Teilstücks des Beschleunigungsabschnitts einer Fahrtrasse anzupassen. Beispielsweise muss eine Statorgruppe am Anfang eines Beschleunigungsabschnitts, bei welchem die Geschwindigkeit des Fahrzeugs noch gering ist, zwar hohe Kräfte, jedoch aber kleine Leistungen aufbringen. Die Statorelemente einer solchen Statorgruppe können deshalb Statorwicklungen umfassen, welche eine höhere Windungszahl besitzen und dadurch mit einem kleineren Motorstrom zur Erzeugung der Vorschubkraft auskommen als Statorgruppen in einem Bereich, bei welchem das Fahrzeug mit der Maximalgeschwindigkeit bewegt wird. Es könnte also vorteilhaft sein, die Statorwicklungen und die Energiewandler an die Geschwindigkeit eines Streckenabschnitts anzupassen. Es könnte jedoch auch vorteilhaft sein, nur die Anzahl der Statorelemente einer Statorgruppe eines Streckabschnitts an die Leistung der Wechselrichters anzupassen, so dass ausschliesslich Wechselrichter gleicher Leistung verwendet werden können. In Streckenabschnitten mit kleinerer Geschwindigkeiten und geringerer erforderlicher Leistung kann die Anzahl der Statorelemente einer Statorgruppe grösser gewählt werden als in Bereichen, in welchen eine hohe Geschwindigkeit und/oder eine hohe Leistung erforderlich ist. Die Statorelemente solcher Streckenabschnitte können in Serie geschaltet werden, um die zur Verfügung stehende Spannung der verbundenen Energiewandler besser ausnutzen zu können. Umgekehrt ist es auch möglich, in Bereichen höherer Geschwindigkeit bzw. höheren Leistung die Anzahl der Statorelemente einer Statorgruppe zu reduzieren. Es ist jedoch auch möglich, sowohl die Statorwicklungen respektive die Windungszahl als auch die Anzahl der Statorelemente einer Statorgruppe an den jeweiligen Streckenabschnitt und die jeweilig in diesem Streckenabschnitt erforderliche Leistung/und oder Geschwindigkeit anzupassen. Beispielsweise können in einem Streckenabschnitt, in welchem eine kleine Geschwindigkeit und/oder kleine Leistung erforderlich ist, die Statorwicklungen der Statorelemente für eine hohe Spannungskonstante ausgelegt bzw. mit einer hohen Windungszahl gewickelt sein. Da der notwendige Motorstrom und die notwendige Leistung für den Betrieb eines solchen Statorelementes geringer ist, können folglich mehrere dieser Statorelemente parallel zu einer Statorgruppe verbunden sein und von einem Energiewandler, welcher für die gleiche Leistung wie diejenigen der anderen Streckenabschnitte ausgelegt sein kann, betrieben werden.

Es können folglich die Energiewandler an einen entsprechenden Streckenabschnitt angepasst werden, um Kosten zu reduzieren oder auch um Energie zu sparen. Umgekehrt können jedoch auch die Statorgruppen bzw. Statorelemente an einen entsprechenden Streckenabschnitt angepasst werden, insbesondere die Anzahl der Statorelemente pro Statorgruppe. Es ist natürlich auch möglich, sowohl die Auslegungsleistung der einzelnen Energiewandler, die Anzahl der Statorelemente pro Statorgruppe, die Beschaltung der Statorelemente innerhalb einer Statorgruppe und die Beschaffenheit der Statorelemente, insbesondere der Wicklungen, in Abhängigkeit eines Streckenabschnitts der Fahrtrasse und des dazugehörigen gewünschten Beschleunigungs- bzw. Bewegungsprofils zu kombinieren.

In einer weiteren besonders bevorzugten Ausführungsform des Linearmotorantriebsystems ist der Stator zur Erhöhung der Beschleunigung des Fahrzeuges flüssigkeitsgekühlt.

Durch die Kombination aus dezentralen Antriebstopologie und Flüssigkeitskühlung des Stators kann eine hohe Leistungsdichte erreicht werden, welche es ermöglicht, auch bei hohen Geschwindigkeiten des Fahrzeugs noch eine hohe Kraft zu erzeugen. Dadurch kann der Beschleunigungsweg weiter verkürzt werden. In einer bevorzugten Ausführungsform wird aufgrund seiner hohen Wärmekapazität Wasser als Kühlflüssigkeit verwendet, es können jedoch auch andere Kühlflüssigkeiten wie beispielsweise Kühlöl verwendet werden. Letzteres erfordert keine Korrosionsschutzmassnahmen und ist elektrisch nicht leitend, was vorteilhaft bei Leckagen ist. Die Kühlflüssigkeit wird vorzugsweise über einen Wärmetauscher auf eine vorgegebene Temperatur oder eine in Relation zur Umgebungstemperatur stehende Temperatur gekühlt. Es kann bei Bedarf eine von der Umgebungstemperatur weitgehend unabhängige Kühlung des Stators erreicht werden, was beispielsweise bei einer forcieren Kühlung mit Umgebungsluft über Ventilatoren nicht möglich ist.

In einer weiteren besonders bevorzugten Ausführungsform der Erfindung umfassen die Statorelemente jeweils mindestens eine erste Trägerplatte aus einem elektrisch nichtleitenden Material und eine Statorwicklung mit mindestens einer Flachspule welche in einer Aussparung der ersten Trägerplatte angeordnet und vergossen ist. Zudem umfasst der Stator zur Flüssigkeitskühlung mindestens ein Kühlelement mit einem flächigen Kühlgehäuse aus einem nicht metallischen Material. Die Trägerplatte des Statorelementes ist flächig mit einer ersten Seitenfläche des Kühlgehäuses verbunden, so dass eine in Bezug auf die Aussparung äussere Seitenfläche der Flachspule unmittelbar zum Kühlgehäuse benachbart ist.

Durch die Verwendung eines elektrisch nichtleitenden Materials für die Trägerplatte werden Reluktanzeffekte zwischen dem Stator und dem Läufer minimiert und ein Nutrastmoment vermieden. Dadurch tritt auch die auf das Nutrastmoment zurückzuführende Kraftwelligkeit nicht auf. Ebenso wird die magnetische Anziehung zwischen Stator und Läufer reduziert und positionsabhängige Querkräfte vermieden, welche sich beispielsweise durch einen sich über die Fahrtrasse nicht konstanten Luftspalt zwischen Stator und Läufer ergeben.

Der Aufbau dieser bevorzugten Ausführungsform erlaubt eine äusserst flache Bauweise und eine effiziente Kühlung. Zudem ermöglicht er eine modulare Bauweise und eine einfache Montage. Durch Verwendung eines nicht metallischen Materials für das Kühlgehäuse müssen keine besonderen Massnahmen zur Unterdrückung von Wirbelstromverlusten unternommen werden. Bevorzugt besteht das Gehäuse aus einem ähnlichen Material wie die Trägerplatte des Statorelementes. Dadurch hat das Kühlgehäuse auch ähnliche thermische Eigenschaften, wodurch thermische Verzüge und Spannungen zwischen der Trägerplatte und dem Kühlgehäuse vermieden werden. Gleichzeitig kann das Kühlgehäuse die Statorstruktur mechanisch verstärken und trägt dabei zur Steifigkeit des Systems bei. Durch die unmittelbare Nachbarschaft des Kühlgehäuses zu den äusseren Seitenflächen der in den Aussparungen in der Trägerplatte angeordneten Flachspulen kann die Wärme der Wicklungen gut abgeführt werden.

Die mindestens eine Flachspule ist in den Aussparungen mit Vorteil vergossen.

Das Vergiessen der Flachspulen erfolgt vorzugsweise mit einem Epoxidharz. Durch das Vergiessen erhalten die Flachspulen eine zusätzliche Stabilität, insbesondere gegen die Verformung und das Verschieben der Flachspulen. Ebenso kann ein Epoxidharz mit einer guten Wärmeleitkapazität verwendet werden, um die Wärme besser abführen zu können. Das Vergiessen der Aussparungen kann auch nach dem Anbringen des Kühlgehäuses erfolgen, wobei durch das Vergiessen gleichzeitig das Kühlgehäuse mit der nichtmetallischen Trägerplatte verbunden wird.

Durch den flächigen Aufbau kann das Kühlelement schichtartig zusammengesetzt werden, wobei die Kühlkanäle grossflächig in die Platten eingearbeitet werden können.

Alternativ können Kühlkanäle direkt in die Trägerplatte des Statorgehäuses integriert werden, beispielsweise durch Bohren von Kühlkanälen oder Einlegen von Rohren in Aussparungen des Statorgehäuses und anschliessendes Vergiessen mit einem Epoxidharz, vorzugsweise beim Vergiessen der Statorwicklungen. Die Rohre können dabei sowohl aus Kunststoff oder metallisch sein, wie zum Beispiel aus Kupfer oder Aluminium oder auch aus einer vorzugsweisen rostfreien Stahllegierung.

In einer weiteren bevorzugten Aufführungsform ist die Statorwicklung des Statorelementes mehrphasig und das Statorelement umfasst mindestens eine Flachspule pro Phase. Die besagten Flachspulen sind dabei parallel zur Fahrtrasse in Aussparungen der ersten Trägerplatte nebeneinander angeordnet und definieren eine erste Spulenreihe, so dass die in Bezug auf die Aussparungen aussenliegenden Seitenflächen der erwähnten Flachspulen der ersten Spulenreihe in einer Ebene liegen und unmittelbar zum Kühlgehäuse benachbart sind.

Es ist jedoch auch möglich, die einzelnen Phasen auf mehrere Statorelemente zu verteilen. Insbesondere kann auch pro Phase ein Statorelement vorgesehen werden. Dadurch kann eine sehr hohe Flexibilität bei der Verschaltung bzw. der Kombination der einzelnen Statorelemente erreicht werden, auch dann noch, wenn standardisierte Statorelemente verwendet werden.

Eine mehrphasige Wicklung ermöglicht einen effizienten Betrieb des Linearmotorantriebssystems mit Wechselrichtern, insbesondere als permanenterregte Synchronmaschine oder als Asynchronmaschine. Die Anordnung der Flachspulen parallel zur Fahrtrasse nebeneinander in einer Reihe in Aussparungen ermöglicht einen äusserst flachen Aufbau des Stators, eine einfache Herstellung, sowie eine vereinfachte Montage. Auf Grund der flachen Bauweise kann ein kleiner Luftspalt realisiert und magnetische Streufelder und somit Verluste minimiert werden. Generell können Flachspulen auch überlappend angeordnet werden und/oder die Wicklungsachse einen Winkel aufweisen, welcher von einem Winkel abweicht, der senkrecht zur Fahrtrasse gerichtet ist.

In einer weiteren bevorzugten Ausführungsform umfasst das Statorelement des erfindungsgemässen Linearmotorantriebssystems eine zweite Trägerplatte aus einem elektrisch nichtleitenden Material und eine Statorwicklung mit mindestens einer Flachspule, die in einer Aussparung der zweiten Trägerplatte angeordnet ist. Dabei ist die zweite Trägerplatte mit einer zweiten Seitenfläche des Kühlgehäuses flächig verbunden, so dass eine in Bezug auf die Aussparung äussere Seitenfläche der Flachspule der zweiten Trägerplatte unmittelbar zum Kühlgehäuse benachbart ist.

Durch den sandwichartigen Aufbau aus zwei Trägerplatten welche das Kühlgehäuse umschliessen kann ein sehr steifer und insbesondere symmetrischer Aufbau erreicht werden. Gleichzeitig kann das Kühlelement beidseitig Wärme abführen, wodurch die Kühlwirkung erhöht wird. Es ist auch möglich, dass die zweite Trägerplatte an der freien Seitenfläche der ersten Trägerplatte angeordnet ist, also an derjenigen Seitenfläche der ersten Trägerplatte, welche der Kühlplatte gegenüberliegt. In dieser Ausführungsform kann an der nicht zur ersten Trägerplatte benachbarten Seitenfläche der zweiten Trägerplatte eine zweite Kühlplatte mit einem Kühlgehäuse angeordnet sein, und zwar so, dass die in Bezug auf die Aussparung äussere Seitenfläche der Flachspule der zweiten Trägerplatte unmittelbar zum Kühlgehäuse der zweiten Kühlplatte benachbart ist. Durch diese Anordnung wird die Wärme des Statorelementes beidseitig abgeführt, weshalb der Stator wärmetechnisch gekapselt ist.

In einer besonders bevorzugten Ausführungsform der Erfindung sind mehrere Flachspulen der mehrphasigen Statorwicklung parallel zur Fahrtrasse in Aussparungen der zweiten Trägerplatte nebeneinander angeordnet. Diese mehreren Flachspulen definieren eine zweite Spulenreihe. Die in Bezug auf die Aussparungen aussenliegender Seitenflächen der Flachspulen der zweiten Spulenreihe liegen in einer Ebene und sind unmittelbar zur zweiten Seite des Kühlgehäuses benachbart. Die Kühlplatte kann somit mittig zwischen zwei Statorreihen angeordnet werden. Durch diese Anordnung kann die Kühlplatte beidseitig Wärme vom Stator abführen, wobei die Wärmeabfuhr in der Mitte der Statorwicklung erfolgen kann, wo die höchste Wärmeentwicklung zu erwarten ist. Durch die zweireihige Anordnung wird zudem zur Kühlplatte hin ein symmetrischer Statoraufbau ermöglicht. Die erste und zweite Spulenreihe sind dabei bevorzugt gleichartig ausgebildet und parallel zueinander ausgerichtet, so dass sie im Wesentlichen gleichteilig zum vom Stator erzeugten Magnetfeld beitragen. Dadurch wird eine besonders günstige Krafterzeugung erreicht, welche weitgehend frei von Querkräften ist. Ebenso kann eine symmetrische Wärmeverteilung in der Statorplatte erreicht werden und Wärmeverzüge in Richtung des Luftspalts des Linearmotors minimiert werden. Der symmetrische Aufbau ist auch vorteilhaft für die Erhöhung der Systemsteifigkeit.

In einer weiteren bevorzugten Ausführungsform des Linearmotorantriebssystems sind die Kühlelemente metallfrei. Durch die Verwendung einer metallfreien Kühlung werden Wirbelstromverluste in den Kühlelementen verhindert. Es besteht zudem keine Korrosionsgefahr bei Verwendung von Wasser als Kühlmedium. Ein metallfreies Kühlelement wirkt gleichzeitig elektrisch isolierend, weshalb es ohne weitere elektrische Isolationsschicht direkt an die Flachspulen des Stators angrenzen kann.

Alternativ können jedoch auch metallbehaftete Kühlelemente verwendet werden, welche wie die Trägerplatten des Statorgehäuses jedoch eisenlos respektive nichtmagnetisch sein sollten. Die Kühlelemente können beispielsweise ein metallisches Gehäuse aus Aluminium oder Titan umfassen oder auch ein nichtmetallisches Gehäuse, zum Beispiel aus Kunststoff, welches durch metallische Teile zur Führung der Flüssigkeit ergänzt ist, beispielsweise durch metallische Rohre oder metallische Folien. Es können auch Kunststoffgehäuse mit Metallpartikel zur Verbesserung der Wärmeleitfähigkeit verwendet werden. Grosse zusammenhängende elektrisch gut leitfähige Flächen senkrecht zum Magnetfeld sind jedoch zu vermeiden, um Wirbelstromverluste zu reduzieren. Dies kann beispielsweise durch pulvermetallurgische Herstellung (Sintern) der metallischen Kühlkörper oder auch die Anbringen von Schlitzen in metallischen Blechen erreicht werden.

Zusätzlich bevorzugt wird auch eine Ausführungsform, in welcher das metallfreie Kühlelement einstückig ausgeführt ist. Unter einem einstückigen Kühlelement wird ein Kühlelement mit einem Kühlgehäuse verstanden, welches aus einem einzigen Material hergestellt ist. Dadurch können jegliche Abdichtungen entfallen. Das Kühlgehäuse kann beispielsweise durch ein additives Verfahren (3D-Druck) oder durch Verschweissen von zwei Platten aus einem ähnlichen oder gleichen Material hergestellt sein. Dabei kann es sich insbesondere um ein Kühlgehäuse aus Kunststoff handeln. In das einstückige Kühlelement können auch Anschlussstutzen zum Anschluss von Kühlleitungen integriert sein. Vorzugsweise hat jedes Kühlelement mindestens einen Anschluss für einen Zulauf sowie einen Anschluss für einen Ablauf der Kühlflüssigkeit.

Bevorzugt wird eine Ausführungsform des Linearmotorantriebssystems, bei welcher mindestens zwischen zwei in Trassenrichtung aufeinanderfolgenden Statorelementen ein Sensormodul angeordnet ist und wobei die Sensormodule zur Bestimmung der absoluten Position und der Geschwindigkeit des Läufers dienen. In einer besonderen Ausführungsform ist zwischen jedem Statorelement jeweils ein Sensormodul angeordnet. Es sind mindestens so viele Sensormodule anzuordnen, dass in jeder Position des Läufers entlang der Beschleunigungsstrecke mindestens ein Sensormodul die Position des Fahrzeugs respektive des Läufers erfassen kann. Durch eine gleichzeitige Auswertung von mehreren Sensormodulen können Messfehler reduziert werden. Die Messfehler eines Sensormoduls können unter anderem auch auf eine fehlerhaften Montage bzw. Ausrichtung des Sensormoduls, eine ungenaue Ausrichtung des Läufers oder auch auf die Messungenauigkeit des Sensormoduls selbst zurückzuführen sein. Eine gute Signalqualität ist insbesondere dann erforderlich, wenn aus dem Positionssignal auch die Geschwindigkeit, beispielsweise durch Differenzierung, ermittelt werden muss. Bei einem permanenterregten Läufer umfasst das Sensormodul vorzugsweise einen Hall-Sensor zur Erfassung des Läufer-Magnetfelds, womit die Lage der Polteilung direkt ermittelt werden kann. Zur Ermittlung des Magnetfelds des Läufers können jedoch auch andere Sensoren, wie zum Beispiel magnetoresistive Sensoren verwendet werden.

Durch das Anordnen der Sensormodule zwischen den Statorelementen kann der Platzbedarf des Linearmotorantriebssystems optimiert und die Montage vereinfacht werden. Es ist keine spezielle Ausrichtung der Sensormodule notwendig, da deren Lage zum Stator definiert ist.

Anstelle oder ergänzend zur Bestimmung des Magnetfelds des Läufers kann jedoch die Position des Läufers oder des Fahrzeugs auch auf Grund von Referenzpunkten am Fahrzeug oder am Fahrzeug angebrachten Referenzmarken oder Referenzteilungen erfolgen, welche eine Positionsbestimmung durch einen im Sensormodul integrierten Sensor ermöglichen. Hier werden vorzugsweise magnetisch oder induktiv arbeitende Sensoren eingesetzt, da diese schmutzresistent und wartungsfrei sind, jedoch sind auch optisch, funktechnisch oder mechanisch arbeitende Systeme möglich. Umgekehrt kann der Sensor auch im Fahrzeug integriert werden und die Referenzteilung oder die Referenzmarken an der Fahrbahn angebracht sein.

In einer zusätzlichen bevorzugten Ausführungsform des Linearmotorantriebssystems besitzen die Flachspulen zentrische Öffnungen, in welche Eisenkerne eingelegt sind, welche bevorzugt aus einem gesinterten ferromagnetischen Material bestehen. Durch die Eisenkerne kann das magnetische Feld konzentriert und somit die Leistungsdichte erhöht werden. Die Eisenkerne können zusammen mit den Flachspulen vergossen werden. Durch die Verwendung von gesinterten ferromagnetischen Eisenkernen können Wirbelstromverluste reduziert werden.

Zur Reduktion von Wirbelstromverlusten können auch segmentierte bzw. geblechte Eisenkerne verwendet werden.

In einer weiteren besonderen Ausführungsform der Erfindung sind die Trägerplatten aus faserverstärktem Kunststoff, insbesondere aus glasfaserverstärktem Kunststoff. In einer weiteren Ausführungsform ist die Trägerplatte aus einem kohlefaserverstärktem Kunststoff. Die Verwendung von faserverstärktem Kunststoff ermöglicht eine mechanisch sehr stabile und steife Konstruktion. Es können jedoch auch andere elektrisch isolierende Materialien für die Trägerplatten verwendet werden, wie beispielsweise Keramik, Kunstharz und PTFE (Teflon).

Bevorzugt wird auch eine Ausführungsform der Erfindung, in welcher jedem Kühlelement ein Statorelement zugeordnet ist. Insbesondere die Montage wird dadurch vereinfacht, da die Kühlelemente zusammen mit den Statorelementen ein Modul bilden können, welches an der Fahrstrecke angebracht werden kann. Es kann jedoch auch vorteilhaft sein, jeder Statorgruppe genau ein Kühlelement zuzuweisen, so dass die Statorgruppen als Module betrachtet werden können. Ebenso können einem Statorelement auch mehrere Kühlelemente zugeordnet werden, vorzugsweise eine ganzzahlige Anzahl, so dass wiederum das Statorelement mit der ganzzahligen Anzahl an Kühlelementen als Modul betrachtet werden kann. Beispielsweise kann es erforderlich sein, zusätzliche Anschlüsse zum Zuführen des Kühlmediums zu haben, um entweder den Durchsatz an Kühlflüssigkeit zu erhöhen oder auch um das Temperaturgefälle im Stator möglichst gering zu halten. In diesem Fall ist es vorteilhaft, jedem Statorelement mehrere Kühlelemente mit je einem Einfluss- und einem Abfluss für das Kühlmedium zuzuordnen. Ebenso kann es vorteilhaft sein, jedem Kühlelement eine ganzzahlige Anzahl an Statorelementen zuzuordnen. Es ist jedoch auch denkbar, ein einziges Kühlelement vorzusehen, an welchem alle Statorelemente angebracht sind. Einem Kühlelement kann jeweils eine Kühleinheit zugeordnet sein. Es ist jedoch in vielen Fällen sinnvoll, mehrere Kühleinheiten zu einer Kühlelementgruppe zusammenzufassen und die Kühlelementgruppe jeweils durch eine gemeinsame Kühleinheit mit der Kühlflüssigkeit zu versorgen. Beschränkend für die mögliche Anzahl von Kühlelementen pro Kühlelementgruppe ist unter anderem der Druckabfall in den Leitungen, die abzuführende Wärme aber auch die zu überwindende Höhendifferenz.

In einer besonders bevorzugten Ausführungsform der Erfindung umfasst der Läufer eine Magnetanordnung mit Permanentmagneten. Die Verwendung von einem Läufer mit Permanentmagneten erlaubt den Betrieb des Linearmotorantriebsystems als Synchronlinearmotor, als elektronisch kommutierter oder auch als mechanisch kommutierter Linearmotor. Insbesondere ein Betrieb als Synchronlinearmotor ist vorteilhaft, da dieser sehr hohe Vorschubkräfte bei einem hohen Wirkungsgrad ermöglicht, gleichzeitig aber auch für eine sehr geringe Kraftwelligkeit ausgelegt werden kann. Unter einer Kraftwelligkeit wird die positionsabhänge Variation der erzeugten Vorschubkraft des Lineamotorantriebssystem verstanden. Vorteilhafterweise werden Permanentmagnete aus seltener Erde wie Somarium-Cobalt und Neodym-Bor verwendet, da diese eine hohe magnetische Feldstärke besitzen. Anstelle eines Läufers mit Permanentmagneten können jedoch auch Kurzschlussläufer oder Reluktanzläufer eingesetzt werden, welche kostengünstig in der Anschaffung sind. Bei Ausführung des Läufers als Kurzschlussläufer kann der Linearmotor über einen mehrphasigen Stator als Asynchronlinearmotor betrieben werden, bei einem Reluktanzläufer auch als Reluktanzmotor. Die letzteren Ausführungsformen haben den Vorteil, dass die Investitionskosten für die Permanentmagnete entfallen. Die Verwendung eines Kurzschlussläufers zusammen mit einem mehrphasigen Stator als Asynchronlinearmotör ermöglicht auch einen Betrieb mit einer geringen Kraftwelligkeit und ist auch sehr gut für den Betrieb in Vergnügungsanlagen geeignet. Zusätzlich muss bei Asynchronmotoren zur Erzeugung der Vorschubkraft nicht zwangsweise die genaue Lage des Läufers bekannt sein, wie das bei Synchronmotoren der Fall ist, bei welchen für den Betrieb die Pollage der Magnete bekannt sein muss.

In einer weiteren bevorzugten Ausführungsform umfasst die Magnetanordnung zwei parallele Magnetreihen, deren Pole entgegengesetzter Polarität sich jeweils gegenüberstehen und welche auf ihrer Länge den Stator beidseitig umgeben. Durch die zweireihige Anordnung werden die Anziehungskräfte zwischen dem Läufer und dem Stator kompensiert, so dass das angetriebene Fahrzeug und die Fahrtrasse keine respektive nur geringe Kräfte quer zur Fahrtrichtung aufnehmen müssen, welche direkt aus der Wechselwirkung zwischen Stator und Läufer resultieren, sondern nur Kräfte, die durch die Beschleunigung bzw. der Bewegung des Fahrzeug hervorgerufen werden. Durch die beiden Magnetreihen wird auch eine grössere magnetische Induktion erzeugt, wodurch sich die Leistungsdichte weiter erhöht. Insbesondere ermöglicht diese Anordnung aber einen parallelen Aufbau des Linearmotorantriebssystem, welcher auch die dynamischen Querkräfte reduziert.

Erfindungsgemäss wird das Linearmotorantriebssystem zur Beschleunigung eines Fahrzeugs auf einer Fahrtrasse zum Personentransport in einer Vergnügungsanlage verwendet. Durch die Möglichkeit auf einer äusserst kurzen Strecke auf eine hohe Geschwindigkeit zu beschleunigen, können wirtschaftlich tragbare Vergnügungsanlagen realisiert werden, welche im Vergleich zum Stand der Technik deutlich höhere Geschwindigkeiten erreichen und so noch mehr Vergnügen und Nervenkitzel erzeugen. Zudem ist das erfindungsgemässe Linearmotorantriebssystem besonders für diese Verwendung geeignet, da es durch seine Redundanz eine hohe Zuverlässigkeit gewährleistet, gleichzeitig aber auch sehr wartungsfreundlich auf Grund der Verschleissfreiheit des berührungslosen Antriebs und der einfach auszutauschenden Systemkomponenten ist. Ein weiterer Vorteil ist, dass sich durch die Verwendung des erfindungsgemässen Linearmotorantriebsystems eine energetisch günstig zu betreibenden Vergnügungsanlage realisieren lässt.

In einer weiteren erfindungsgemässen Verwendungsform wird das erfindungsgemässe Linearmotorantriebssystem zur Beschleunigung einer Bohrvorrichtung in einem Bohrturm verwendet.

Heute werden Bohrlochtiefen von über 3000m erreicht, wobei die Bohrlöcher selbst sich zum Teil tiefer als 4000m unter dem Meeresboden befinden. Die Bohrtürme selbst sind zum Teil über einhundert Meter hoch. Die Bohrvorrichtung eines Bohrturms umfasst neben dem Bohrer ein Bohrgestänge, welches sich aus einer bestimmten Anzahl aus Bohrstangen zusammensetzt. Für eine Bohrung muss die gesamte Bohrvorrichtung, also der Bohrer mitsamt des gesamten Bohrgestänges, mittels des Fahrzeugs des Linearmotorantriebssystems nach unten transportiert werden, respektive für einen Bohrerwechsel oder auch zur Entnahme von Proben wieder nach oben befördert werden.

Das dazu notwendige Einsetzen bzw. das Herausnehmen der Bohrstangen ist auf Grund der langen Verfahrwege sowie den hohen zu beschleunigenden Massen sehr zeitintensiv. Vor dem Einsetzen einer Bohrstange, muss das Fahrzeug des Linearmotorantriebssystems jeweils eine obere Position anfahren, damit die Bohrstange eingesetzt und dann anschliessend zusammen mit der gesamten Bohrvorrichtung nach unten bewegt werden kann. Die Anfahrbewegung nach oben, vor dem Einwechseln einer neuen Bohrstange, erfolgt ohne Bohrgestänge, weshalb das Beschleunigungsvermögen des Linearmotorantriebsystems ohne Bohrgestänge bis auf eine maximale Geschwindigkeit einen grossen Einfluss auf die Prozessnebenzeit hat. Umgekehrt muss vor dem Herausnehmen einer Bohrstange das Fahrzeug, an welchem sich das Bohrgestänge befindet, möglichst rasch die obere Position anfahren können, wofür wiederum eine hohe Vorschubkraft notwendig ist, diesmal wenn die komplette Bohrvorrichtung am Fahrzeug montiert ist. Durch die erfindungsgemässe Verwendung des Linearmotorsystems in Bohrtürmen sind sehr hohe Beschleunigungen und Geschwindigkeiten der Bohrvorrichtung möglich, wodurch die Prozessnebenzeit beim Bohren bedeutend reduziert werden kann. Ein weiterer Vorteil der erfindungsgemässen Verwendung des Linearmotorantriebssystems ist, dass das Antriebssystem verschleissfrei arbeitet.

Alternativ lassen sich zur Beschleunigung bzw. der Bewegung der Bohrvorrichtung seilwindenbasierte Antriebssysteme verwenden, bei welchen die Bohrvorrichtung an einem Drahtseil aufgehängt ist, welches über eine Seiltrommel auf- bzw. abgewickelt wird, wodurch die Bohrvorrichtung jeweils angehoben oder absenkt wird. Ein Grossteil des Antriebsmoments wird hier zum Beschleunigen der Seiltrommel verwendet.

In einer bevorzugten Ausführungsform wird das Linearmotorantriebssystem für einen schiffsgebundenen Bohrturm verwendet. Unter schiffsgebundenen Bohrtürmen werden hier im weiteren Sinne Bohrtürme verstanden, welche sich auf dem Wasser befinden und nicht fest mit dem Boden verbunden sind, also dem Wellenschlag und/oder den Gezeiten unterworfen sind. In diesem Sinne können beispielsweise auch Bohrtürme auf schwebenden Bohrinseln zu den schiffsgebundenen Bohrtürmen gezählt werden. Ein schiffsgebundener Bohrturm ist folglich einem Wellenschlag unterworfen, der das Schiff mit dem Bohrturm relativ zum Meeresboden, Flussbett oder Seegrund hebt und senkt. Das Bohrgestänge mit dem Bohrer soll diese Bewegung relativ zum Meeresboden jedoch nicht mitmachen. Diese Relativbewegung kann durch das erfindungsgemässe Linearmotorantriebssystem ausgeglichen werden, indem es eine der Schiffsbewegung entgegengesetzte Beschleunigung des Fahrzeugs bewirkt, an welchem die Bohrvorrichtung befestigt ist. Der Fahrwagen bewegt sich folglich relativ zum Bohrturm, welcher die Fahrtrasse definiert.

Durch das erfindungsgemässe Linearmotorantriebssystem kann der Wellenschlag ausgeglichen werden, um mit der Bohrvorrichtung einen optimalen Bohrdruck zu erreichen und insbesondere um einen Bruch der Bohrvorrichtung zu vermeiden. Eine solche Hub-Kompensation kann auch mit einem seilwindenbasierten System realisiert werden, jedoch wird durch die erfindungsgemässe Verwendung des Linearmotorantriebssystems eine präzisere Kompensation möglich, da das erfindungsgemässe System wesentlich dynamischer ist und genauer geregelt werden kann. Es muss auch nicht die Trägheit einer Seiltrommel überwunden werden.

Die Ausgleichsbewegung zum Wellenschlag erfolgt ein ständiges Beschleunigen und Abbremsen des Fahrzeugs: die jeweils benötigte oder freigewordene Energie kann in einem Energiespeicher zwischengespeichert werden, so dass nur ein geringer Energieverbrauch auf Grund der Kompensationsbewegung anfällt.

Zusammenfassend ist zu sagen, dass die Erfindung zum einen den Aspekt einer dezentralen Antriebstopologie gemäss den Ansprüchen 1 - 6, andererseits den Aspekt des flachen Statoraufbaus mit integrierter Flüssigkeitskühlung gemäss der Ansprüche 7 - 13 enthält. Beide Aspekte zusammen ermöglichen eine besonders hohe Beschleunigung des Fahrzeuges entlang der Fahrstrasse. Es ist jedoch auch möglich die beiden Aspekte unabhängig voneinander zu realisieren und Linearmotorantriebssysteme entsprechend beider Aspekte getrennt voneinander in den erfindungsgemässen Verwendungsformen gemäss den Ansprüchen 14 und 15 zu verwenden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Vereinfachte schematische Darstellung einer Ausführungsform des erfindungsgemässen Linearmotorantriebssystem;
- Fig. 2: Vereinfachte Explosionsdarstellung einer erfindungsgemässen Anordnung eines dreiphasigen Statorelementes mit einem Kühlelement;
- Fig. 3: Vereinfachte schematische Darstellung des Schnittes III aus Fig. 2;
- Fig. 4: Vereinfachte Explosionsdarstellung einer weiteren erfindungsgemässen Anordnung eines dreiphasigen Statorelementes mit einem Kühlelement;
- Fig. 5: Vereinfachte schematische Darstellung eines Teilschnittes V aus Fig. 4.;
- Fig. 6: Schematische Darstellung eines Bohrturms mit einem erfindungsgemässen Linearmotorantriebssystem.

Grundsätzlich sind in den Figuren gleiche Teile mit gleichen Bezugszeichen versehen.

### Wege zur Ausführung der Erfindung

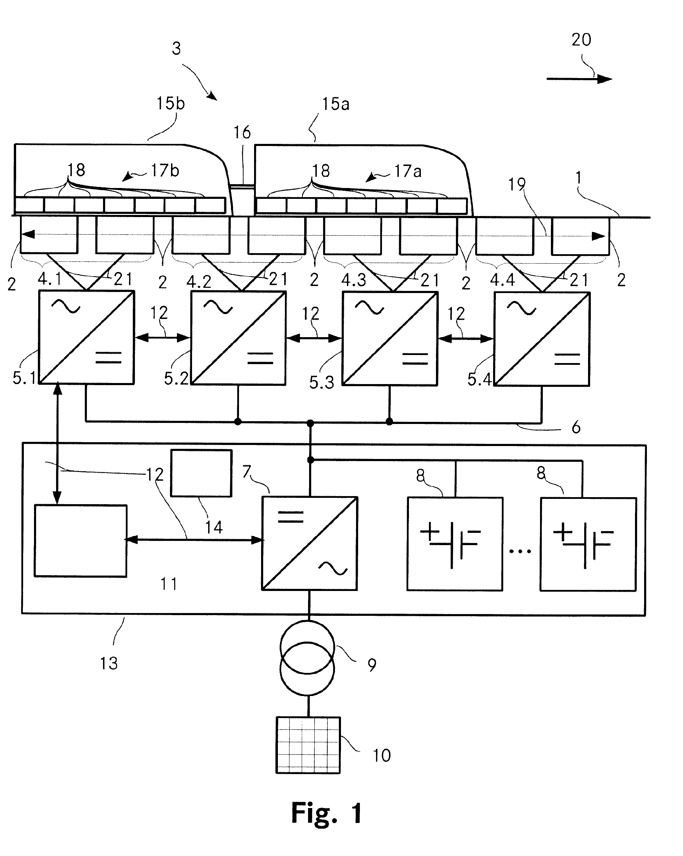

In Fig. 1 ist eine mögliche Ausführungsform der Erfindung gezeigt. Sie zeigt eine Fahrtrasse 1, entlang welcher Statorelemente 2 angebracht sind. Auf der Fahrtrasse 1 ist ein Fahrzeug 3 entlang der Fahrtrasse 1 beweglich gelagert, beispielsweise über ein Rollen-Schienensystem. Zwei nebeneinanderliegende Statorelemente 2 sind jeweils zu einer Statorgruppe 4.1, 4.2, 4.3, 4.4 zusammengefasst, welche jeweils permanent mit einem Wechselrichter 5.1, 5.2, 5.3, 5.4 verbunden sind. Die dargestellten Statorelemente 2 umfassen jeweils Statorwicklungen aller drei Phasen des dreiphasigen Drehstromsystems. Die Statorelemente 2 je einer Statorgruppe 4.1, 4.2, 4.3, 4.4 sind in Serie geschaltet. Die Statorgruppen 4.1, 4.2, 4.3, 4.4 sind mit dem permanent verbundenen Wechselrichter 4.1, 4.2, 4.3, 4.4, über je zwei dreisträngige Verbindungen 21 verbunden, da für jede der drei Phasen jeweils ein Ausgang und ein Eingang vorgesehen ist. Der jeweilige Ein- und Ausgangsstrang einer Phase wird jeweils an die beiden Anschlüsse eines von insgesamt drei Einphasenrichtern angeschlossen, welche jeder der Wechselrichter 5.1, 5.2, 5.3, 5.4 umfasst. Der Vorteil dieser Schaltungsanordnung ist eine geringere Klemmenspannung an den Motorphasen. Die Statorgruppen 4.1, 4.2, 4.3, 4.4 können jedoch auch über eine konventionelle Dreieck- oder Sternschaltung an den jeweiligen Frequenzwandler angeschlossen werden, wobei die Ausgangsstufe des Frequenzwandlers dann eine konventionelle B6 Brücke umfassen kann. In diesem Fall benötigt die Statorgruppe jeweils nur einen Anschlussstrang pro Phase, gegebenfalls zuzüglich eines optionalen Anschlussstrangs zum Anschluss eines möglichen Sternpunkts.

Die insgesamt vier Wechselrichter 5.1-5.4 des Ausführungsbeispiels gemäss Fig. 1 sind mit ihrem Gleichspannungseingang an einen gemeinsamen zweisträngigen Spannungszwischenkreis 6 angeschlossen (nur symbolisch dargestellt). Der Gleichspannungszwischenkreis 6 ist auch mit dem Gleichspannungsausgang einer Speiseeinheit 7, welche einen aktiven Gleichrichter umfasst, und mit mehreren Batteriespeichermodulen 8 verbunden. Der Gleichspannungszwischenkreis 6 ist in diesem Beispiel für eine Zwischenkreisspannung im Niederspannungsbereich (bis max. 1500 V) ausgelegt. Der Speiseeinheit ist auf seiner Eingangsseite über einen Transformator 9 an ein öffentliches Drehstromnetz 10 angeschlossen, wobei der Transformator 9 die Mittelspannung des Drehstromnetzes auf eine Niederspannung (bis max. 1000V) heruntertransformiert. Das erfindungsgemässe Ausführungsbeispiel umfasst weiterhin eine zentrale Steuereinheit 11, welche die Steuerung des Fahrzeugs 3 übernimmt. Dazu ist sie mit den einzelnen Wechselrichtern 5.1, 5.2, 5.3, 5.4 verbunden, welche sie in Abhängigkeit der Istposition und Istgeschwindigkeit bzw. der Sollposition und/oder Sollgeschwindigkeit des Fahrzeugs 3 ansteuert. Die Erfassung der Istposition erfolgt mittels Hallsensormodulen (nicht dargestellt), welche zwischen den Statorelementen positioniert sind und welche die absolute Pollage der Permanentmagnete am Fahrzeug 3 erfassen können. Ebenso erlauben sie über die Differentiation der Lageinformation die Ermittlung der Geschwindigkeit des Fahrzeugs 3. Insbesondere ist im Falle des Synchronmotors die Lage der Magnetpole des Fahrzeugs 3 in Bezug auf die Statorwicklungen notwendig, um die Ströme phasenrichtig in den Statorwicklungen einprägen zu können. In dem Beispiel ist die Zentrale Steuereinheit 11 über einen Feldbus 12 mit den einzelnen Umrichtern 5.1-5.4 sowie mit der Speiseeinheit 7 verbunden. Die Hallsensoren sind direkt an die Wechselrichter angeschlossen, welche die Sensorsignale über den Feldbus 12 an die zentrale Steuereinheit 11 übertragen. Die Hallsensoren können jedoch auch direkt mit der zentralen Steuereinheit 11 verbunden sein. Die Speiseeinheit 7, die zentrale Steuereinheit 11 und die Batteriemodule 8 sind in einem zentralen Steuerschrank 13 untergebracht, während die Statorelemente 2, die Hall-Sensormodule und die Wechselrichter 5.1-5.4 an der Fahrtrasse 1 angeordnet sind. Dadurch kann der zentrale Steuerschrank 13 sehr klein gehalten werden. Die Zentrale Steuereinheit 13 enthält weiterhin noch ein Kühlaggregat 14 für die Wasserkühlung der Statorelemente 2. Die für die Wasserkühlung notwendigen Kühlleitungen sind in Fig. 1 übersichtlichkeitshalber nicht dargestellt.

Das Fahrzeug 3 umfasst einen ersten Wagen 15a und einen zweiten Wagen 15b, welche über eine Kardangelenk 16 miteinander verbunden sind, so dass der Abstand zwischen den beiden Wagen in Fahrtrassenrichtung auch bei der Fahrt konstant bleibt. Am Fahrzeug 3 ist eine Permanentmagnetanordnung aus einer ersten Permanentmagnetreihe 17a und einer zweiten Permanentmagnetreihe 17b angebracht, wobei die erste Permanentmagnetreihe 17a aus sieben Permanentmagnetgrundmodulen 18 am ersten Wagen des Fahrzeug und die zweite Permanentmagnetreihe 17b aus weiteren sieben Permanentmagnetgrundmodulen 18 am zweiten Wagen 15b angeordnet ist. Ein Permanentmagnetgrundmodul 18 besitzt in Fahrtrassenrichtung 20 jeweils einen Nord-und einen Südpol. Die Permanentmagnetgrundelemente 18 sind so angeordnet, dass sich in Fahrtrassenrichtung 20 die Magnetpole abwechseln, wobei die Polteilung der halben Breite eines Permanentmagnetgrundmoduls entspricht. Die Permantmagnetgrundmodule 18 umfassen dabei beispielsweise in zwei Reihen parallel angeordnete Permanentmagnete, deren Pole entgegengesetzter Polarität sich jeweils gegenüberstehen und welche auf ihrer Länge den Stator beidseitig umgeben. Es kann jedoch auch eine einreihige Anordnung verwendet werden. Das Kardangelenk garantiert, dass der Abstand in Fahrtrassenrichtung zwischen der ersten Permanentmagnetreihe 17a und der zweiten Permanentmagnetreihe 17b während der Fahrt auch unter Last konstant bleibt, wobei der Abstand zwischen der ersten Permanentmagnetreihe 17a und der zweiten Permanentmagnetreihe 17b in dem Beispiel genau einer Polteilung entspricht.

In dem Ausführungsbeispiel befindet sich der Läufer respektive die Permanentmagnetanordnung bestehend aus den beiden Permanentmagnetreihen 17a, 17b im Wirkbereich der ersten Statorgruppe 4.1, der zweiten Statorgruppe 4.2 und der dritten Statorgruppe 4.3, welche alle aktiviert sind und zum Vorschub beitragen, während die vierte Statorgruppe 4.4 noch nicht aktiviert ist, jedoch unmittelbar davorsteht aktiviert zu werden. Es wird nun angenommen, dass das Fahrzeug aus der Fahrtrassenrichtung 20 kommend in den Wirkbereich tritt. Da zu Beginn des Eintritts des Fahrzeugs 3 respektive des Läufers in den Wirkbereich des Stators 19 sich zuerst nur der vordere Wagen 15a mit seiner Permanentmagnetreihe 17a im Wirkbereich des Stators befindet, wird zu Beginn nur die erste Statorgruppe 4.1 über den Wechselrichter 5.1 mit Energie versorgt. Sukzessiv mit der Fortbewegung des Fahrzeugs in Fahrtrassenrichtung werden die einzelnen Statorgruppen 4.2-4.4 über die dazugehörigen Wechselrichter 5.1-5.4 ebenfalls aktiviert, bis der letzte Wagen des Fahrzeugs wieder aus dem Wirkbereich der ersten Statorgruppe 4.1 austritt und somit die erste Statorgruppe 4.1 deaktiviert wird. Je nach Position des Fahrzeugs sind demnach 1-4 Wechselrichter aktiv und versorgen das Fahrzeug 3 mit Energie.

In Fig. 1 sind auf Grund der besseren Anschaulichkeit die Permanentmagnetgrundmodule 18 und die Statoren so dargestellt, dass sie durch einen Luftspalt getrennt werden welcher in einer Ebene liegt, welche parallel zur Fahrbahn und senkrecht zur Zeichenebene verläuft. Es sind jedoch auch Anordnungen möglich, bei welchem der Luftspalt in einer Ebene oder mehrere Luftspalten in mehreren Ebenen parallel zur Zeichnungsebene liegen.

Ebenso wurde zur besseren Darstellbarkeit in Fig. 1 ein kurzer Stator gewählt; die Statorgruppen in Fig. 1 setzen sich aus demselben Grund aus nur zwei Statorelementen zusammen. Für Vergnügungsanlagen typisch sind längere Statoren, welche sich aus deutlich mehr Statorelementen zusammensetzen. Besonders bevorzugt sind Statoren mit Längen von ca. 20m - 150m, welche sich aus mehreren Statorelementen gleicher Grösse zusammensetzen, beispielsweise aus Statorelementen mit einer Länge von 0.7m und einer Höhe von 0.3 m. Die Statorelemente werden in Fahrtrassenrichtung in einem Abstand von 0.1 m zueinander montiert, so dass alle 0.8 m der Fahrtrasse jeweils ein Statorelement zu finden ist. Eine Statorgruppe setzt sich typischerweise aus je 3 - 6 Statorelementen zusammen, deren Flachspulen in Serie geschaltet sind. Es kann jedoch in manchen Fällen auch eine Parallelschaltung zwischen den Statorelementen einer Gruppe vorteilhaft sein. Der freie Raum zwischen den Statorelemente wird zur Montage der Sensormodule verwendet. Bei typischerweise 3 - 6 Statorelementen pro Statorgruppe ergibt sich, dass alle 2.4m - 4.8m eine Statorgruppe entlang der Fahrstrecke montiert ist.

In den folgenden Zeichnungen sind ähnliche oder gleiche Elemente von verschiedenen Ausführungsformen durch ähnliche Bezugszeichen gekennzeichnet, welche sich durch ihre Hunderterziffer unterscheiden, sofern sie in verschiedenen Zeichnungen dargestellt sind.

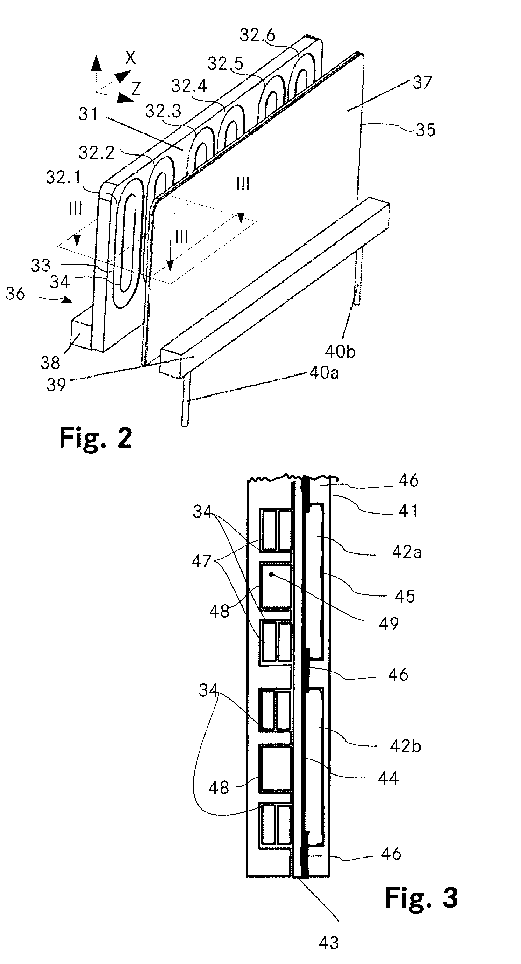

Fig. 2 zeigt in Form einer Explosionszeichnung eine vereinfachte Darstellung einer erfindungsgemässen Anordnung eines dreiphasigen Statorelementes und eines Kühlelementes. Zur Bezeichnung der Achsrichtungen wird ein kartesisches Koordinatensystem mit den Koordinatenachsen X, Y, Z verwendet. Die X-Achse zeigt in Richtung der Fahrtrasse bzw. in die positive Vorschubrichtung. Eine Beschleunigung des Fahrzeugs bzw. eine Kraft in diese Richtung hat dementsprechend auch ein positives Vorzeichen. Die Y-Achse stellt die Höhenachse dar und ist senkrecht zur Fahrtrasse gerichtet, zeigt also bei einer horizontal verlaufenden Fahrtrasse entgegengesetzt zur Richtung der Erdanziehungskraft. Die Z-Achse ist entsprechend quer zur Fahrtrasse gerichtet.

Das Statorelement umfasst eine Trägerplatte 31 mit einer rechteckigen Grundfläche, deren lange Seite in Richtung der X-Achse und deren kurze Seite in Richtung der Y-Achse verläuft. Die Dicke der Platte wird durch ihre Ausdehnung in Z-Richtung bestimmt. Die Trägerplatte 31 besitzt 6 ringförmige Aussparungen 32.1 - 32.6, deren jeweilige Aussenkontur 33 und Innenkontur 34 jeweils eine ovale Grundform besitzen, die sich aus zwei Geraden und zwei Halbkreisen zusammensetzt. Die Aussparungen 32.1 - 32.6 sind in die Trägerplatte 31 aus glasfaserverstärktem Kunststoff (GFK) gefräst. Die 6 Aussparungen 32.1 - 32.6 sind dazu zu drei Paaren benachbarter Aussparungen gruppiert, wobei die benachbarten Aussparungen jeweils mit zwei geraden Längsseiten Ihrer ovalen Aussenkonturen 34 aneinandergrenzen. Die Gruppen sind in X-Richtung respektive in Richtung der Fahrtrasse über die Trägerplatte 31 verteilt: Die beiden Aussparungen 31.1 und 31.2 des ersten Paars nehmen jeweils Flachspulen einer ersten Phase U auf, die Aussparungen 31.3 und 31.4 des zweiten Paars nehmen die Flachspulen einer zweiten Phase V auf, während Aussparungen 31.5 und 31.6 des dritten Paars jeweils die Flachspulen einer dritten Phase W aufnehmen. In dem Ausführungsbeispiel sind pro Aussparung jeweils zwei Flachspulen übereinander gestapelt. Die Flachspulen selbst weisen in der Mitte jeweils eine zentrische Öffnung auf, welche an der Innenkontur 34 der jeweiligen Aussparung 33.1 - 33.6 anliegt. Zwischen der zentrischen Öffnung bzw. innerhalb der Innenkontur 34 der Aussparungen 32.1 - 32.6 kann in einer weiteren Aussparung, einer inneren Aussparung- hier nicht dargestellt - ein Eisenkern zur Konzentration des Magnetfelds eingelegt werden. Die Aussparungen 32.1 - 32.6 können anstatt ringförmig auch durchgehend mit einer ovalen Grundfläche ausgebildet sein, welche durch die Aussenkontur 33 begrenzt ist. Der Eisenkern kann dann direkt in die zentrische Öffnung der Flachspulen eingelegt werden.

Nicht dargestellt sind in Fig. 2a auch die Kanäle in der Trägerplatte zur Aufnahme der Anschlusslitzen der jeweiligen Flachspulen in den Aussparungen 32.1 - 32.6.

Ein Kühlelement mit einem flächigen Kühlgehäuse in Form einer Kühlplatte 35 ist an dem Statorelement angeordnet. Die Kühlplatte 35 hat die gleiche Grundfläche wie die Trägerplatte 31 und wird zusammen mit den Flachspulen deckungsgleich mit der Trägerplatte 31 vergossen. An einer Aussenseite 36 der Trägerplatte 31 und auf Aussenseite 37 der Kühlplatte 35 sind jeweils in einem unteren Bereich Anschlussleisten 38, 39 mit einem nahezu quadratischen Querschnitt vorgesehen. Die Anschlussleisten 38, 39 erstrecken sich über die ganze Länge der jeweiligen Platten 31, 35. Während die Anschlussleiste 38 der Trägerplatte 31 ausschliesslich der Befestigung der Trägerplatte 31 auf der Fahrtrasse dient, dient die Anschlussleiste 39 der Kühlplatte 35 auch der Zuführung von Kühlmittel. Dazu besitzt die Anschlussleiste 39 der Kühlplatte 35 einen Kühlmitteleinfluss 40a und einen Kühlmittelabfluss 40b. Das Kühlmittel gelangt über zwei, in Fahrtrassenrichtung weiter vorne sich gegenüberliegenden Bohrungen in der Anschlussleiste 38 und in der Kühlplatte 35 (beide nicht sichtbar) in die Kühlplatte 35 hinein und entsprechend über zwei, in Fahrtrichtung weiter hinten gelegene, sich gegenüberliegende Bohrungen in der Kühlplatte 35 und in der Anschlussleiste 38 aus der Kühlplatte 35 hinaus (ebenfalls nicht sichtbar).

In Fig. 3 ist ein Teilschnitt III der Explosionszeichnung vergrössert dargestellt, der den Aufbau der Kühlplatte 35 des obigen Ausführungsbeispiels illustriert.

Die Kühlplatte 35 ist aus mehreren Schichten aufgebaut: Sie umfasst eine Grundplatte 41 in welcher die Flüssigkeitskanäle 42a, 42b gefräst sind, einen Kühlgehäusedeckel 43, welcher die Kühlplatte 35 abdeckt und im montierten Zustand zwischen der Trägerplatte 31 und einer Grundplatte 41 der Kühlplatte 35 angeordnet ist. Die Grundplatte 41 und der Kühlgehäusedeckel 41 definieren im montierten Zustand die Form der Flüssigkeitskühlkanäle 42a, 42b der Kühlplatte 35. Auf der Innenseite des Kühlgehäusedeckels 43 aufgebracht, beispielsweise durch Aufdampfen, ist eine wasserundurchlässige Schicht 44 als Wassersperre. Auf der Innenseite der Grundplatte 41 ist eine weitere wasserundurchlässige Schicht, hier in Form einer wasserundurchlässigen Folie 45, zur Abdichtung der Flüssigkeitskanäle 42a, 42b gegenüber der Grundplatte 41 angeordnet. Ein elastischer, temperaturbeständiger Klebstoff 46 welcher an Kontaktstellen zwischen der wasserundurchlässigen Folie 45 und der wasserundurchlässigen Schicht 44 aufgetragen wird, dient zur Befestigung der Abdeckplatte 43 mit der Grundplatte 41 und fungiert gleichzeitig als Abdichtung der Kühlkanäle 42a, 42b zwischen den Kontaktstellen. Die Kühlkanäle 42a, 42b sind gegenüber den Flachspulen der Phase U angeordnet, welche in den Aussparungen 32.1, 32.2 des ersten Paars liegen (Siehe Fig. 2). In den beiden dargestellten Aussparungen 32.1, 32.2 sowie auch in den anderen Aussparungen 32.3-32.6 welche in der Fig. 3 nicht dargestellt sind, sind jeweils zwei Flachspulen 47 übereinander angeordnet. Zwischen den zentrischen Öffnungen der Flachspulen 47 und innerhalb der Innenkonturen 34 der Aussparungen 32.1 und 32.2 sind jeweils weitere Aussparungen 48 angeordnet, in welche Eisenkerne 49 zur Flusskonzentration eingelegt sind. Sowohl die Flachspulen 47 als auch die Eisenkerne 49 sind mit einem Epoxidharz vergossen.

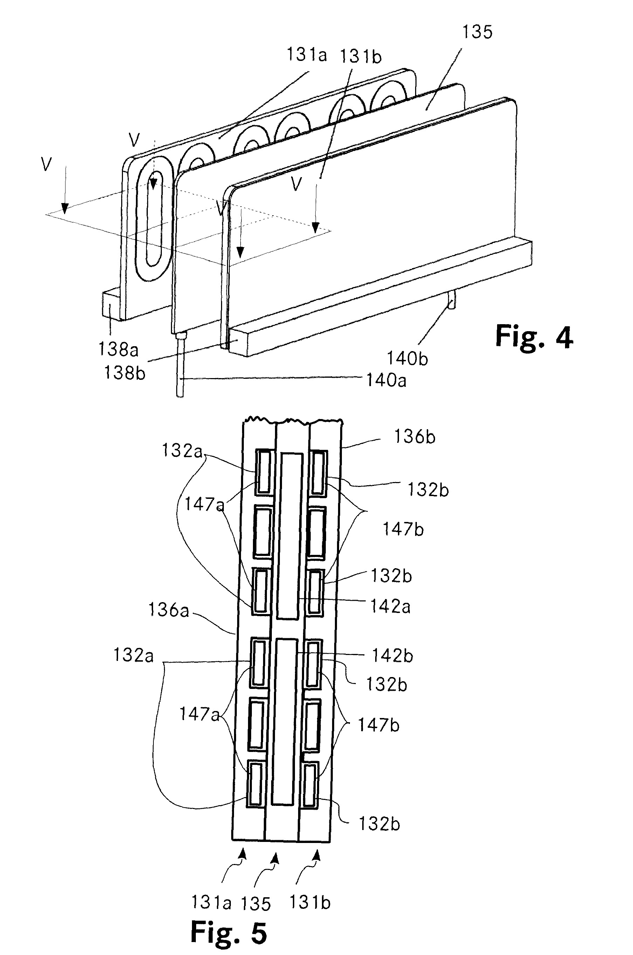

Die Explosionszeichnung in Fig. 4 zeigt eine vereinfachte Darstellung einer weiteren erfindungsgemässen Anordnung eines dreiphasigen Statorelementes und eines Kühlelements mit einem flächigen Kühlgehäuse in Form einer Kühlplatte 135. Im Gegensatz zur Ausführungsform gemäss Fig. 2 umfasst das Statorelement gemäss Fig. 4 eine erste Trägerplatte 131a und eine zweite Trägerplatte 131 b, welche die Kühlplatte 135 sandwichartig umgeben. Beide Trägerplatten 131a und 131b sind symmetrisch zueinander angeordnet und entsprechen im Aufbau der Trägerplatte 31 des obigen Ausführungsbeispiels. Entsprechend umfassen die beiden Trägerplatten 131 wiederum jeweils sechs Aussparungen 132.1 - 132. 6, jedoch ist in jeder Aussparung nur eine Flachspule angeordnet, so dass die Aussparungen weniger tief als im vorhergehenden Ausführungsbeispiel ausfallen können und somit auch die einzelnen Trägerplatten dünner gestaltet sind. An einer Aussenseite 136a der ersten Trägerplatte 131a und auf Aussenseite 136b der zweiten Trägerplatte 131b sind jeweils in einem unteren Bereich Anschlussleisten 138a, 138b mit einem nahezu quadratischen Querschnitt vorgesehen. Die Anschlussleisten 138a, 138b erstrecken sich über die ganze Länge der jeweiligen Platten 131 a, 131b. Die beiden Anschlussleisten 138a, 138b dienen der Befestigung der Trägerplatten 131a und 131b auf der Fahrtrasse. Die Kühlplatte 135 besitzt einen eigenen Kühlmitteleinfluss 140a und einen Kühlmittelabfluss 140b.

In Fig. 5 ist eine mögliche Ausführungsform des Teilschnitts V dargestellt. Die Kühlplatte 135 ist einstückig und symmetrisch ausgeführt. Durch die einstückige Ausführung fallen die Schnittstellen weg, welche bei einer zwei- oder mehrstückigen Ausführungsform zwangsläufig gegeben sind. Die Kühlplatte 135 kann aus einem beliebigen nichtmetallischen Material bestehen, welches flüssigkeitsdicht, elektrisch isolierend und temperaturresistent ist, vorzugsweise jedoch aus einem Kunststoff, wie beispielsweise einem faserverstärktem Kunststoff. Dadurch können die Materialschichten weggelassen werden, welche zur Abdichtung der Kühlkanäle 42a, 42b in der Ausführungsform gemäss den Fig. 2 und 3 benötigt werden: die wasserundurchlässige Schicht 44, die wasserundurchlässige Folie 45, sowie der temperaturbeständige Klebstoff 46, (Siehe Fig. 3). Das Statorelement umfasst im Gegensatz zur Ausführungsform gemäss Fig. 2 zwei Trägerplatten 131 a, 131b, welche symmetrisch an den Aussenseiten der Kühlplatte 135 angeordnet sind: Die erste Trägerplatte 131a ist an einer ersten Aussenseite des Kühlplatte 135, die zweite Trägerplatte 131 b an einer zweiten Aussenseite der Kühlplatte 135 angeordnet. In den Aussparungen 132a, 132 der beiden Trägerplatten 131a, 131b ist jeweils nur eine Flachspule 147a, b eingegossen. Dabei bilden die Flachspulen 147 der ersten Trägerplatte 131a eine erste Wicklungsreihe und die Flachspulen 147b der zweiten Trägerplatte 147b eine zweite Wicklungsreihe. Die Flachspulen 147a, 147b beider Wicklungsreihen grenzen unmittelbar an das Kühlgehäuse 135 an, welches folglich beidseitig Wärme abführen kann.

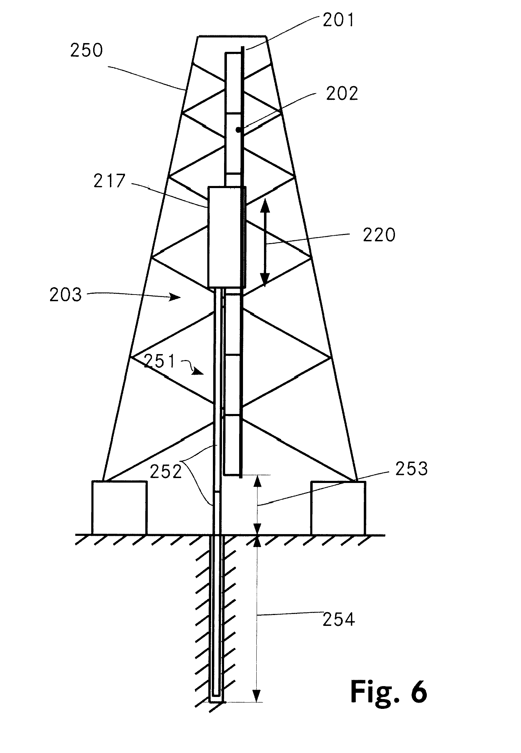

In Fig. 6 zeigt eine stark vereinfachte schematische Darstellung eines erfindungsgemässen Linearmotorantriebssystems zum Antrieb eines Fahrzeugs 203 entlang einer Linearführung 201 eines Bohrturms 250, welche die Fahrtrasse für das Fahrzeug 203 bildet. Längs der Fahrtrasse sind Statorelemente 202 angeordnet, mit welchem ein am Fahrzeug angeordneter Läufer 217 mit Permanentmagneten (nicht sichtbar) wechselwirkt und in Fahrtrassenrichtung 220 beschleunigt respektive bewegt wird. Am Fahrzeug 203 ist eine Bohrvorrichtung mit einem Bohrgestänge 251 befestigt, welches sich aus mehreren Bohrstangen 252 einer bestimmten Länge zusammensetzt, wobei die Anzahl der Bohrstangen 252 sowohl von der Bohrtiefe 253 sowie vom Abstand des Bohrlochs zum Bohrturm 254 abhängig ist. Ebenso ist am Fahrzeug der Drehantrieb angeordnet (nicht dargestellt), welcher das Bohrgestänge 251 in Rotationsbewegung versetzt und welcher mit dem Fahrzeug mitbewegt wird. Mit steigender Bohrtiefe müssen sukzessive Bohrstangen zum Bohrgestänge zugefügt werden. Dazu muss das Fahrzeug jeweils in eine obere Position gefahren werden, in welcher eine neue Bohrstange 252 zwischen dem Fahrzeug 203 und der bisher obersten Bohrstange 252 eingesetzt werden kann. Für das Anfahren der oberen Position muss das Fahrzeug 203 zusammen mit dem Bohrgestänge 251 schnell entlang der Linearführung 201 beschleunigt werden und dabei auch die Gewichtskraft des Fahrzeugs 203 und des Bohrgestänges 251 überwinden, sofern die Gewichtskraft nicht über einen Gewichtsausgleich kompensiert wird. Dieser kann beispielsweise in Form eines hydraulischen oder pneumatischen Gewichtsausgleiches oder auch über Gegengewicht realisiert sein. Ist die Bohrstange eingesetzt, wird anschliessend das Bohrgestänge 251 über den Wagen wieder nach unten bewegt, bis der Bohrer mit dem Bohrgestänge 251 wieder seine Arbeitsposition erreicht hat, in welcher der Bohrvorgang fortgesetzt werden kann. Für diesen Vorgang ist eine hohe Beschleunigung erforderlich, um eine möglichst kurze Prozessnebenzeit zu erzielen. Beispielsweise zum Wechseln eines Bohrkopfes oder nach Abschluss des Bohrvorganges müssen sämtliche Bohrstangen wieder demontiert werden und dazu das Fahrzeug 203 jeweils für jede der Bohrstange 252 die obere Position anfahren. Soll eine Bohrung mit einem gewechselten Bohrkopf fortgesetzt werden, müssen entsprechend wieder die zuvor entnommenen Bohrstangen 252 eingesetzt werden, wofür wiederum das Fahrzeug 203 für jede Bohrstange 252 jeweils in die obere Position zurückgefahren werden muss, bevor das um die eine Stange verlängerte Bohrgestänge durch das Fahrzeug wieder um eine Stufe nach unten gefahren werden kann, so dass das Einsetzen der nächsten Bohrstange möglich wird. Die Bohrtürme erreichen heute eine Höhe von über 130m, und Bohrlochtiefen von über 3000m, welche sich zum Teil über 4000m unter dem Meeresspiegel befinden. Die Zeit für das Einsetzen bzw. das Herausnehmen der Bohrstangen bzw. das Beschleunigen des Fahrwagens hat einen grossen Anteil am gesamten Bohrvorgang, weshalb durch eine hohe Beschleunigung des Fahrwagens eine grosse Effizienzsteigerung des Bohrprozesses möglich wird. Zudem muss bei schiffsgebundenen Bohrtürmen und bei bestimmten Bohrplattformen auch ein Wellenschlag kompensiert wird, wofür das erfindungsgemässe Linearantriebssystem gut geeignet ist.

Die Energiewandler für das Linearmotorantriebssystems können sowohl entlang des Bohrturms als auch am Deck des Bohrschiffes untergebracht werden.

Zusammenfassend ist festzustellen, dass ein Linearmotorantriebssystem geschaffen wurde, welche eine Beschleunigung eines Fahrzeugs entlang einer Fahrtrasse auf eine hohe Geschwindigkeit in einem kurzen Weg ermöglicht. Es ist weiterhin festzustellen, dass ein Linearmotorantriebssystem geschaffen wurde, welches einen zuverlässigen und kostengünstigen Betrieb ermöglicht und einfach zu unterhalten ist.

## Patentansprüche

1. Linearmotorantriebssystem zur Beschleunigung eines Fahrzeugs (3, 203) innerhalb eines Beschleunigungsabschnitts auf einer Fahrtrasse (1, 201), insbesondere zum Personentransport in einer Vergnügungsanlage, umfassend
a) einen Stator mit mindestens zwei längs der Fahrtrasse (1, 201) angeordneten Statorelementen (2) mit Statorwicklungen,
b) wobei die Statorelemente (2) zu mindestens zwei Statorgruppen (4.1 - 4.4) zusammengefasst sind,
c) und einen Läufer, welcher am Fahrzeug (3) befestigt ist und welcher mit einem vom Stator erzeugten Magnetfeld zu wechselwirken vermag,
**dadurch gekennzeichnet,**
d) **dass** jede Statorgruppe (4.1 - 4.4) mit mindestens einem eigenen Energiewandler (5.1 - 5.4) zur Energieversorgung permanent verbunden ist, der einzeln angesteuert werden kann,
e) wobei mindestens zwei der Statorgruppen (4.1 - 4.4) derart angeordnet sind, dass der Läufer gleichzeitig mit den mindestens zwei Statorgruppen (4.1 - 4.4) wechselwirken kann, wobei diese mindestens zwei Statorgruppen (4.1 - 4.4) gleichzeitig jeweils von dem eigenen Energiewandler (5.1 - 5.4) mit Energie versorgbar sind
f) und wobei der Stator zur Erhöhung der Beschleunigung des Fahrzeugs (3) vorzugsweise aktiv gekühlt ist.

2. Linearmotorantriebssystem gemäss Anspruch 1, bei welchem eine Wirklänge des Läufers länger ist als eine Wirklänge (4.1 - 4.4) eines von zwei aufeinanderfolgenden Statorgruppen (4.1 - 4.4) erzeugten Magnetfelds, vorzugsweise aber kürzer als eine Wirklänge des Stators (19).

3. Linearmotorantriebssystem gemäss einem der vorangehenden Ansprüche, mit einer Speiseeinheit (7) und mit mindestens einem zweisträngigen Versorgungsbus, vorzugsweise einem Gleichspannungsbus (6), wobei der Versorgungsbus über die Speiseeinheit (7) mit einem Stromnetz (10) verbindbar ist und die Energiewandler (5.1 - 5.4) über den Versorgungsbus mit Energie versorgbar sind.

4. Linearmotorantriebssystem gemäss einem der vorangehenden Ansprüche, welches einen Energiespeicher umfasst, der an den Versorgungsbus (6) angeschlossen ist und der es ermöglicht, die Ein- bzw. Rückspeiseleistung vom bzw. ins Stromnetz (10) zu reduzieren wobei der Energiespeicher vorzugsweise mindestens eine Batterie (8) umfasst.

5. Linearmotorantriebssystem nach einem der vorangehenden Ansprüche, bei welchem die Energiewandler Wechselrichter (5.1 - 5.4) sind, wobei die Wechselrichter (5.1 - 5.4) vorzugsweise mehrphasige Wechselrichter (5.1 - 5.4) und/oder Niederspannungs-Wechselrichter (5.1 - 5.4) sind, welche vorzugsweise alle für die gleiche Leistung ausgelegt sind.

6. Linearmotorantriebssystem gemäss einen der vorangehenden Ansprüche, bei welchem die aktive Kühlung des Stators zur Erhöhung der Beschleunigung des Fahrzeugs (3) eine Flüssigkeitskühlung ist.

7. Linearmotorantriebssystem gemäss Anspruch 6,
a) wobei die Statorelemente (2) jeweils mindestens eine erste Trägerplatte (31, 131a) aus einem elektrisch nichtleitenden Material
b) und eine Statorwicklung mit mindestens einer Flachspule (47, 147) umfassen,
c) welche in einer Aussparung (32.1 - 32.6, 132a) der ersten Trägerplatte (31, 131a) angeordnet,
d) und vergossen ist,
e) und dass der Stator zur Flüssigkeitskühlung mindestens ein Kühlelementmit einem flächigen Kühlgehäuse (35, 135) aus einem nicht metallischen Material umfasst,
f) und dass die Trägerplatte (31, 131a) des Statorelementes (2) flächig mit einer ersten Seitenfläche des Kühlgehäuses (35, 135) verbunden ist, so dass eine in Bezug auf die Aussparung (32.1 -32.6, 132a) äussere Seitenfläche der Flachspule (47, 147) unmittelbar zum Kühlgehäuse (35. 135) benachbart ist.

8. Linearmotorantriebssystem gemäss Anspruch 7, wobei
a) die Statorwicklung des Statorelementes (2) mehrphasig ist,
b) das Statorelement (2) mindestens eine Flachspule (47, 147, 147a) pro Phase umfasst,
c) und die besagten Flachspulen (47, 147) parallel zur Fahrtrasse (1, 201) in Aussparungen (32.1 - 32.6, 132a) der ersten Trägerplatte (31, 131a) nebeneinander angeordnet sind und eine erste Spulenreihe definieren,
so dass die in Bezug auf die Aussparungen (32.1 - 32.6, 132a) aussenliegenden Seitenflächen der erwähnten Flachspulen (47, 147, 147a) der ersten Spulenreihe in einer Ebene liegen und unmittelbar zum Kühlgehäuse (135) benachbart sind.

9. Linearmotorantriebssystem gemäss einem der Ansprüche 7 oder 8, wobei das Statorelement (2) eine zweite Trägerplatte (131b) aus einem elektrisch nichtleitenden Material und eine Statorwicklung mit mindestens einer Flachspule (47) umfasst, die in einer Aussparung (132b) der zweiten Trägerplatte (131 b) angeordnet ist, und wobei die zweite Trägerplatte (131b) mit einer zweiten Seitenfläche des Kühlgehäuses (135) flächig verbunden ist, so dass eine in Bezug auf die Aussparung (132b) äussere Seitenfläche der Flachspule (47) der zweiten Trägerplatte (131b) unmittelbar zum Kühlgehäuse (135) benachbart ist.

10. Linearmotorantriebssystem gemäss den Ansprüchen 8 und 9, wobei mehrere Flachspulen (147b) der mehrphasigen Statorwicklung parallel zur Fahrtrasse (1, 201) in Aussparungen (132b) der zweiten Trägerplatte (131b) nebeneinander angeordnet sind und eine zweite Spulenreihe definieren und die in Bezug auf die Aussparungen (132b) aussenliegender Seitenflächen der Flachspulen der zweiten Spulenreihe (147b) in einer Ebene liegen und unmittelbar zur zweiten Seite des Kühlgehäuses (135) benachbart sind.

11. Linearmotorantriebssystem nach einem der vorangehenden Ansprüche 7 - 10, wobei die Kühlelemente metallfrei und/oder einstückig ausgeführt sind.

12. Linearmotorantriebssystem gemäss einem der Ansprüche 7 - 11, wobei mindestens zwischen zwei Statorelementen (2) in Trassenrichtung ein Sensormodul angeordnet ist und wobei die Sensormodule zur Bestimmung der absoluten Position und der Geschwindigkeit des Läufers dienen.

13. Linearmotorantriebssystem gemäss einem der vorangehenden Ansprüche, wobei der Läufer eine Magnetanordnung (17a,b) mit Permanentmagneten (18) umfasst und wobei die Magnetanordnung zwei parallele Magnetreihen umfasst, deren Pole entgegengesetzter Polarität sich jeweils gegenüberstehen und welche auf ihrer Länge den Stator beidseitig umgeben.

14. Verwendung eines Linearmotorantriebssystem gemäss den vorangehenden Ansprüchen zur Beschleunigung eines Fahrzeugs (3) zum Personentransport in einer Vergnügungsanlage.

15. Verwendung eines Linearmotorantriebssystem gemäss einem der Ansprüche 1 - 13 zur Beschleunigung einer Bohrvorrichtung eines Bohrturms (250), vorzugsweise eines schiffgebundenen Bohrturms.
